# EUROPEAN PATENT APPLICATION

(11) **EP 0 901 251 A2**
(43) Date of publication of application: **10.03.1999**
(21) Application number: 98105187.3
(22) Date of filing: 23.03.1998
(51) Int. Cl.: H04L 12/24

(54) **A system for operating and maintaining an access node**

(30) Priority: 08.09.1997 JP 242667/97
(71) Applicant: FUJITSU LIMITED, Kawasaki-shi, Kanagawa 211-8588 (JP)
(72) Inventor: Yamamoto, Kunio, c/o Fujitsu Limited, Kawasaki-shi, Kanagawa 211-8588 (JP)
(74) Representative: von Fischern, Bernhard, Dipl.-Ing.

(57) **Abstract**

Even if the manufacturers of an access node and an end switching equipment connected with each other using a V5 link are different, the operation and maintenance can be linked between the end switching equipment and the access node while converting operation and maintenance information dependent on the end switching equipment to operation and maintenance information dependent on the access node, and vice versa on an operation and maintenance console by connecting the operation and maintenance console which can be easily implemented using a general-purpose personal computer, etc., to an access node operation and maintenance adapter provided together with the access node and further connecting the operation and maintenance console to the end switching equipment.

## Description

### Background of the Invention

### Field of the Invention

The present invention relates to an operating and maintaining technology for an access node connected to an end switching equipment, having a function to expand a geographical accommodation area of subscribers managed by the access node.

### Description of the Related Art

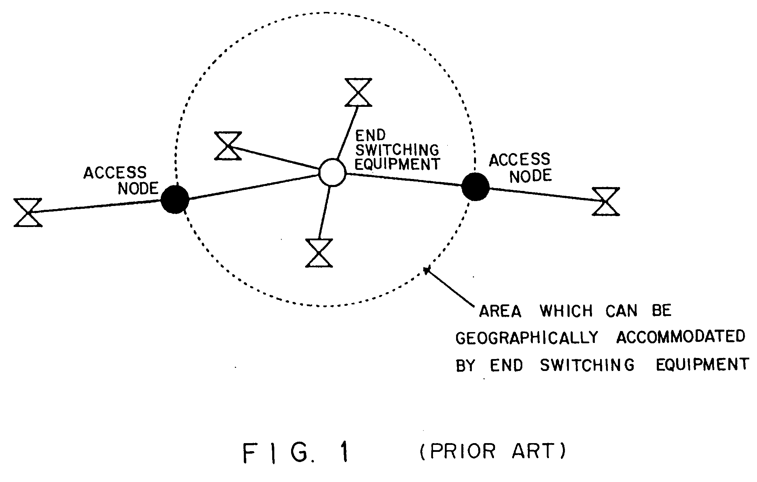

A technology by which subscriber lines difficult to be accommodated in an end switching equipment due to a long distance can be accommodated in a remote device called an access node which is connected to the end switching equipment, is widely known. As shown in Fig.1, by installing an access node a geographical accommodation area of subscribers managed by an end switching equipment can be expanded.

Conventionally, the access node has been developed and provided according to the particular specifications of the manufacturer of the end switching equipment as a remote device for the end switching equipment. However, these days the standardization of a communication protocol for specifying each processing function of both the end switching equipment and access node and the communication between the switching equipment and the access node, has been promoted. As a typical example, a V5 system standardized by the ITU-T is widely known.

By standardizing in this way, each of the end switching equipment and the access node can be purchased individually, and each of the manufacturers of the end switching equipment and the access node can be selected individually. Furthermore, by making the diversion of existing equipment possible, the reduction of plant and equipment investment cost is expected for the providers of switching services.

Accordingly, in the V5 system there is a strong possibility that each of the access node and the end switching equipment is supplied by a different manufacturer.

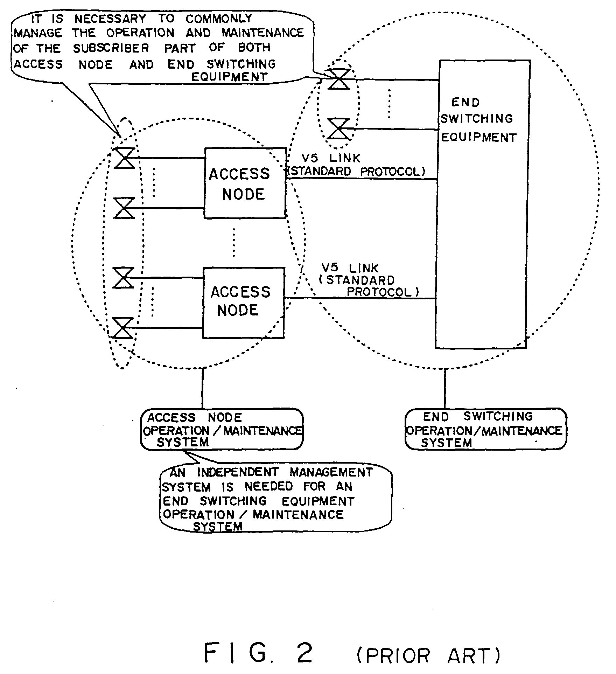

In the V5 system it is specified that the operation and maintenance of the end switching equipment and the access node should be carried out according to the regulation of a Q3 interface. However, in fact, there are few equipment manufacturers who support this Q3 interface. Even if this Q3 interface is supported, it only has something in common with the lower order layer of the protocol for operation and maintenance, however, and most of information essentially needed for the operation and maintenance of the end equipment and the access node such as the configuration of the access node, etc. are left to the equipment manufacturers. For this reason, the operation and maintenance of the V5 system cannot help but be carried out according to the specifications decided by the manufacturer of each piece of equipment comprising the V5 system. Accordingly, as shown in Fig.2, it has become necessary to manage the access node and the end switching equipment using independent operation and maintenance systems.

On the other hand, the operation and maintenance system of communication service operators is currently configured around the end switching equipment. For this reason, in fact, it is necessary that the operation and maintenance of the access node are carried out jointly with the operation and maintenance of the end switching equipment. Furthermore, as shown in Fig.2, there is a part in which independent management is difficult to carry out and thereby the accommodation information of subscribers and the class information of subscribers have to be jointly managed.

In fact, the operation and maintenance of an access node by which the above-mentioned problem can be solved is not realized yet.

### Summary of the Invention

The present invention has been made considering the above-mentioned background, and it is an object of the present invention to manage an access node and an end switching equipment by independent operation and maintenance systems and to efficiently link the operation and maintenance systems.

In the present invention an operation and maintenance system of an access node (access node 301) is presumed in which the access node is connected to a switching equipment (end switching equipment 302) by a logical link (V5 link) in which a predetermined communication protocol (V5 system) is specified, and it has a function to expand a geographical accommodation area of subscribers managed by the end switching equipment.

The first mode of the present invention comprises the following.

First, the system comprises an operation and maintenance terminal unit (operation and maintenance console 502) including a first communication circuit, an information converting circuit and a second communication circuit, as described below.

The first communication circuit (LAN interface circuit 802) is connected with the end switching equipment using a first interface (communication link 506), and switching equipment dependent information being information dependent on the end switching equipment is communicated between the first communication circuit and the end switching equipment.

The information converting circuit (microprocessor 803, etc.) converts switching equipment dependent information to access node dependent information being information dependent on the access node, and vice versa alternately.

A man-machine interface circuit (microprocessor 803, display unit 811, keyboard/mouse 813, printer 815, etc.) edits the access node dependent information.

The second communication circuit (RS232C interface circuit 801) is connected to a second interface (RS232C interface 505).

Both above-mentioned switching equipment dependent information and access node dependent information include, for example, information for initializing the access node (subscriber accommodating information 1601, accommodation information of V5 link 1602, V5 control channel information 1603, etc.)

Both switching equipment dependent information and access node-dependent information also include, for example, information for controlling a subscriber test in the access node (subscriber logical ID, etc.). More specifically, this information includes test designation information needed to test analog subscribers accommodated in the access node, and test result information for indicating the result of a test. This information also includes test loop information needed to conduct a loop test for digital subscribers accommodated in the access node.

The access node dependent information is stored in an application program storing unit (hard disk 807) connected to the operation and maintenance terminal unit, and includes an application program for operating the access node.

The access node dependent information further includes status request information for requesting the status of the access node, status modification information for modifying the status of the access node, and status information for indicating the status of the access node.

Next, the system comprises an operation and maintenance link terminating circuit, an operation and maintenance terminal connecting circuit and an access node operation and maintenance adapter unit including an access node dependent information relaying circuit (access node operation and maintenance adapter 501).

The operation and maintenance link terminating circuit (TS0 dropper/inserter unit 503) accommodates a predetermined logical link connected to the access node, and terminates an operation and maintenance link (time slot TS0) set in the logical link.

The operation and maintenance terminal connecting circuit (console interface circuit 711) connects the operation and maintenance terminal units using the second interface.

The access node dependent information relaying circuit (microprocessor 707, etc.) relays access node dependent information between the operation and maintenance terminal unit and the access node via the second communication circuit, the second interface, the operation and maintenance terminal connecting circuit, the operation and maintenance link terminating circuit and the operation and maintenance link.

In the configuration of the above-mentioned first mode of the present invention, when both switching equipment dependent information and access node dependent information include, for example, information for initializing the access node, the access node executes the initializing process of the access node according to access node dependent initializing information relayed by the access node operation and maintenance adapter unit. In this case, particularly the access node can be so configured as to execute an initializing process according to the access node dependent initializing information while synchronizing with the end switching equipment using a logical link in which the above-mentioned predetermined communication protocol is specified.

When both switching equipment dependent information and access node dependent information include, for example, information for controlling a subscriber test in the access node, the access node executes a subscriber test in the access node according to access node dependent subscriber test information relayed by the access node operation and maintenance adapter unit.

When the access node-dependent information is stored in the application program storing unit connected to the operation and maintenance terminal unit, and includes an application program for operating the access node, the access node starts to operate according to the application program transmitted via the access node operation and maintenance adapter unit.

When the access node dependent information includes status request information for requesting the status of the access node, status modification information for modifying the status of access node or status information for indicating the status of the access node, the access node returns the status in the access node to the operation and maintenance terminal unit or modifies the status in the access node according to status request/modification information sent to the operation and maintenance terminal unit via the access node operation and maintenance adapter unit.

By adopting the configuration of the first mode of the present invention described above, even if the manufacturers of the access node and the end switching equipment connected with each other by a logical link in which the predetermined communication protocol is specified, are different, the operation and maintenance between the end switching equipment and the access node can be jointly carried out while converting the switching equipment dependent information dependent on the switching equipment to the access node dependent information dependent on the access node, and vice versa alternately in the operation and maintenance terminal unit by connecting the operation and maintenance terminal unit which can be easily implemented by a general-purpose personal computer, etc., to the access node operation and maintenance adapter unit provided together with the access node, and further connecting the operation and maintenance terminal unit to the end switching equipment.

In this case, the man-machine interface function of the operation and maintenance terminal unit makes detailed maintenance of operation and maintenance information possible.

Management particular to the access node such as down-loading of application programs to the access node, status management of the access node, etc. can be made by only the operation and maintenance terminal unit and the access node operation and maintenance adapter unit without the end switching equipment. As a result, the functions of the access node can be made fully available.

The second mode of the present invention comprises the following in addition to the configuration of the first mode of the present invention described above.

That is, the access node operation and maintenance adapter unit includes both an alarm analyzing circuit (alarm analysis processing unit 1702) for analyzing alarms relating to the access node being access node dependent information received from the access node via the operation and maintenance link and operation and maintenance link terminating circuit, and an alarm reporting circuit (communication interface unit 504) for reporting an alarm according to the result of an alarm analysis by the alarm analyzing circuit.

This alarm reporting circuit further includes a telephone terminal circuit (telephone terminal circuit 712) for reporting an alarm by dialling a predetermined telephone terminal unit.

This alarm reporting circuit also includes a centralized maintenance center connecting circuit (LAPB interface circuit 714) for reporting an alarm by being connected to a predetermined centralized maintenance center.

By adopting the configuration of the second mode of the present invention described above, alarm control strongly dependent on the configuration of the access node can be realized by only the access node operation and maintenance adapter unit without the end switching equipment.

Particularly, to the maintenance personnel managing the end switching equipment, alarms can also be reported in detail by dialling a predetermined telephone terminal unit from the access node operation and maintenance adapter unit or by connecting the access node operation and maintenance adapter unit 501 to the centralized maintenance center.

By adopting the configuration of the first mode of the present invention described above, even if the manufacturers of the access node and the end switching equipment connected with each other by a logical link in which a predetermined communication protocol is specified, are different, the operation and maintenance between the end switching equipment and the access node can be jointly carried out while converting the switching equipment dependent information dependent on the end switching equipment to the access node dependent information dependent on the access node, and vice versa alternately in the operation and maintenance terminal unit, by connecting the operation and maintenance terminal unit which can be easily implemented by a general-purpose personal computer, etc., to the access node operation and maintenance adapter unit provided together with the access node, and further connecting the operation and maintenance terminal unit to the end switching equipment.

In this case, the man-machine interface function of the operation and maintenance terminal unit makes detailed maintenance of operation and maintenance information possible.

Management particular to the access node such as down-loading of application programs to the access node, status management of the access node, etc. can be made by only the operation and maintenance terminal unit and access node operation and maintenance adapter unit without the end switching equipment. As a result, the function of the access node can be made fully available.

By adopting the configuration of the second mode of the present invention described above, alarm control strongly dependent on the configuration of the access node can be realized by only the access node operation and maintenance adapter unit without the end switching equipment.

Particularly, to the maintenance personnel managing the end switching equipment, alarms can also be reported in detail by dialling a predetermined telephone terminal unit from the access node operation and maintenance adapter unit or connecting the access node operation and maintenance adapter unit to the centralized maintenance center.

### Brief Description of the Drawings

The other objects and characteristics of the present invention will be more apparent to a person having ordinary skill in the art from the following detailed description in conjunction with the preferred embodiment and accompanying drawings, in which:
Fig.1 shows the positioning of an access node and an end switching equipment.
Fig.2 shows the relationship between an operation and maintenance system for an access node and an operation and maintenance system for an end switching equipment.
Fig.3 shows the functional summary of a V5 system.
Fig.4 shows a data structure in a V5 link.
Fig.5 shows the overall configuration of a V5 access node operation and maintenance system in this preferred embodiment.
Fig.6 is a block diagram of an access node.
Fig.7 is a block diagram of an access node operation and maintenance adapter unit.
Fig.8 is a block diagram of an operation and maintenance console.
Fig.9 is a communication sequence chart for the initializing setting of an access node operation and maintenance adapter unit.
Figs.10A and 10B show the structure of control data for the initializing setting of an access node operation and maintenance adapter unit.
Fig.11 explains the functions of a software down-loading process.
Fig.12 is a communication sequence chart for a software down-loading process.
Figs.13A to 13D show the structure of control data for a software down-loading process.
Fig.14 explains the functions of an initializing information setting process for an access node.
Fig.15 is a communication sequence chart for an access node V5 system initializing process.
Figs.16A to 16F show the structure of control data for an access node V5 system initializing process.
Fig.17 explains the functions of an alarm-related process.
Fig.18 is a communication sequence chart for alarm reporting (reporting to the local intra-office maintenance personnel).
Fig.19 is a communication sequence chart for alarm reporting (reporting to the centralized maintenance center).
Fig.20 is a communication sequence chart for alarm reporting (report request from an adapter/console).
Figs.21A and 21B show the structure of control data for an alarm report.
Fig.22 explains the functions of a status-related process.
Fig.23 is a communication sequence chart for a status-related process.
Figs.24A and 24B show the structure of control data for a status monitor.
Figs.25A and 25B show the structure of control data for status modification.
Fig.26 explains the functions of a subscriber line/subscriber circuit test (analog-related test).
Fig.27 is a communication sequence chart for a subscriber line/subscriber circuit test (analog-related test).
Figs.28A to 28J show the structure of control data for a subscriber line/subscriber circuit test (analog-related test).
Fig.29 explains the functions of an ISDN subscriber-related test (digital).
Fig.30 is a communication sequence chart for an ISDN subscriber-related test (digital).
Figs.31A to 31F show the structure of control data for an ISDN subscriber-related test (digital).

### Description of the Preferred Embodiments

The preferred embodiments of the present invention are described in detail in reference with the drawings below.

### System configuration of this preferred embodiment

### 〈Functional summary of V5 system〉

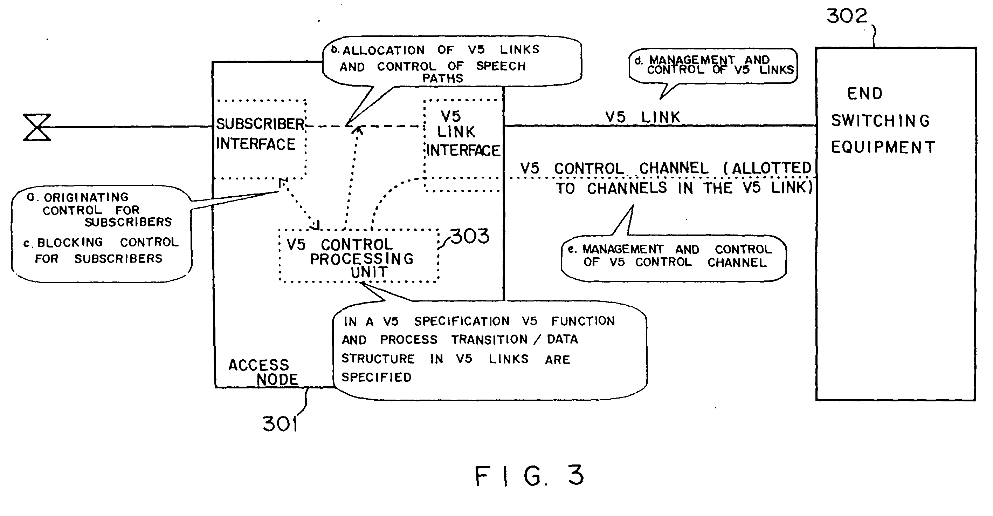

Fig.3 shows the functional summary of a V5 system.

In a V5 system, for each of the following, detailed functional control and the process transition in each functional control are specified.
a. Originating and receiving control of subscribers (subscriber interface function)
b. Allocation control of a V5 link when originating and receiving, and control of a speech path in an access node 301 (V5 link interface function)
c. Blockage control of subscribers (subscriber interface function)
d. Management control of a V5 link (V5 link interface function)
e. Management control of a V5 control channel (V5 link interface function)
In the V5 system, as described later, data structure in a V5 link is also specified.

In the access node 301 each function of the V5 system described above is to be implemented as a V5 control processing unit 303 operated according to a control instruction from end switching equipment 302.

However, for the operation and maintenance system of the access node 301, a specific system from manufacturer which provides the access node 301 is needed. The operation and maintenance of the access node 301 include a initializing setting process of the access node 301, a status controlling process/ trouble shooting process of the equipment in the access node 301, a testing/diagnosing process (including a subscriber-related test) in the access node , etc.. There is a possibility that one end switching equipment 302 accommodates a plurality of access nodes from a plurality of manufacturers.

### 〈Data structure in the V5 link〉

In the V5 system, a minimum of 1 V5 link and a maximum of 16 V5 links are set between the access node 301 and the end switching equipment 302.

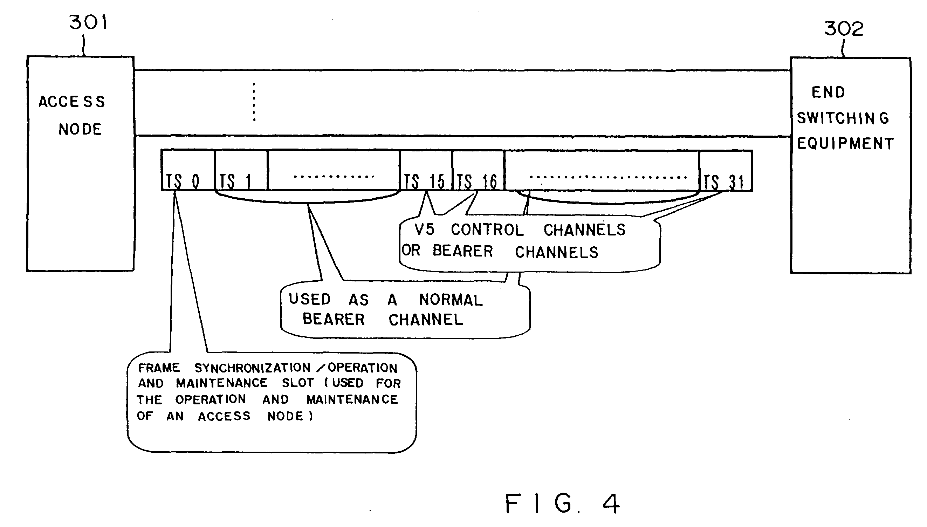

As shown in Fig.4, each V5 link is time-divided into 32 time slots of TS0 to T231.

The time slot TS0 accommodates a frame synchronizing pattern, failure information (alarm)/operation and maintenance information , etc..

The time slots TS15, TS16 and TS31 are used as control channels for V5 or bearer channels for line users.

The other time slots are used for normal bearer channels for line users.

The access node 301 and the V5 operation and maintenance system of this preferred embodiment, described later, are connected using an operation and maintenance link being one link of the V5 links shown in Fig.4. This operation and maintenance link is composed using the fourth, the fifth and the sixth bits in the time slot TS0, and has a transmission rate of 24 kilo-bits/second.

### 〈Configurational summary of the operation and maintenance system〉

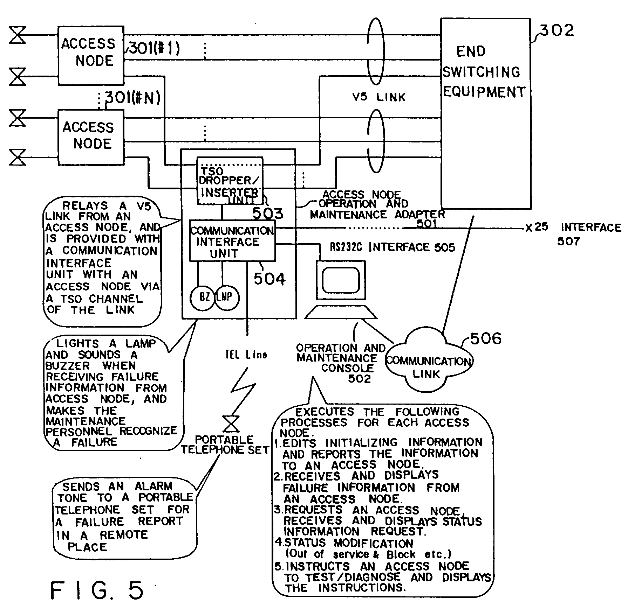

Fig.5 shows the overall configuration of the V5 access node operation and maintenance system of this preferred embodiment. The present invention is characterized in that in this preferred embodiment an access node operation and maintenance adapter 501 is supplied by the same manufacturer as the access node 301.

In fig.5 a TS0 dropper/inserter unit 503 in the access node operation and maintenance adapter 501 terminates all operation and maintenance links (the fourth, the fifth and the sixth bits of a time slot TS0) in each V5 link corresponding to each of the access nodes 301 (#1 to #N) accommodated in the end switching equipment 302.

A communication interface unit 504 in the access node operation and maintenance adapter 501 reports failures in the access node reported via the TS dropper/inserter unit 503, to the maintenance personnel by means of lamps, a buzzer or a buzzer-off key. Or the communication interface unit 504 reports the above-mentioned failures to a telephone set in a remote maintenance room or a portable telephone set of the maintenance personnel by means of a message according to a predetermined setting.

An access node operation and maintenance console 502 (hereinafter called "operation and maintenance console 502") is connected to the communication interface unit 504, for example, using an RS232C interface 505. The operation and maintenance console 502 functions as a man-machine interface for receiving an input/editing from the maintenance personnel. It is also connected with the end switching equipment 302 using a communication link 506 composed of other RS232C interfaces or an Ethernet LAN interface, and subscriber-related information is transmitted and received between the operation and maintenance console 502 and the end switching equipment 302.

A centralized maintenance center described later (not shown in the drawing) is also connected to the communication interface unit 504, for example, using a X25 interface 507.

### 〈Detailed configuration of access node 301〉

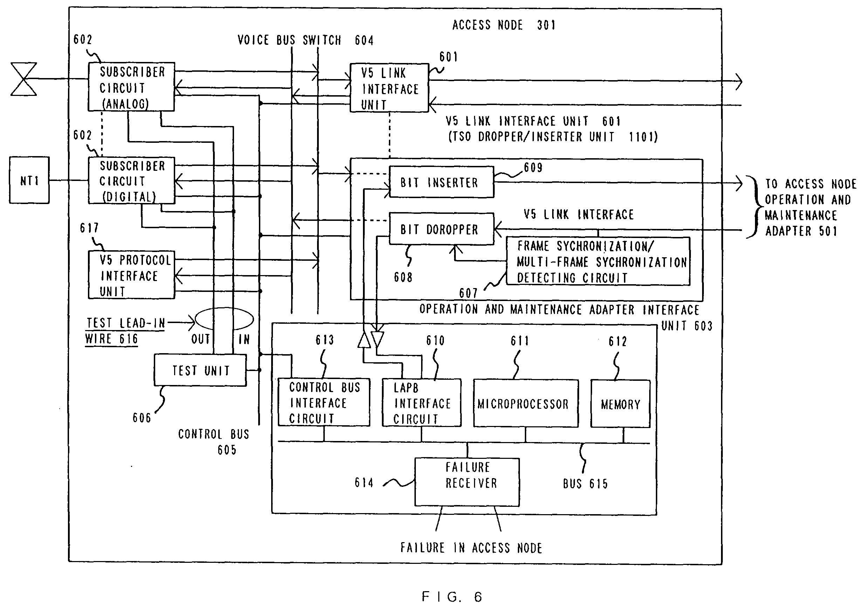

Fig.6 is a block diagram of an access node composing a V5 access node operation and maintenance system shown in Fig.5.

The access node 301 accommodates a subscriber circuit 602 (analog), a subscriber circuit 602 (digital:ISDN) for accommodating a digital terminating circuit NT1, and a V5 link interface unit 601 for terminating V5 links.

Each of the subscriber circuits 602 and each V5 link interface unit 601 are connected with each other by means of a voice bus switch 604. The voice bus switch 604 implements multiplexing and switching of user channels.

The V5 interface unit 601 relays bearer channels for line users in the V5 link shown in Fig.4 between the subscriber circuit 602 and the end switching equipment 302, and also relays subscriber originating and receiving control information, multiplexing-switching control information, block and unblock control information of subscribers and V5 links, etc. between a V5 protocol interface unit 617 and the end switching equipment 302 using control channels for V5 of time slots TS15, TS16 and TS 31 shown in Fig.4.

To test the electrical characteristics of the subscriber circuit 602 and subscriber line, the subscriber circuit 602 is connected to a test unit 606 via a lead-in wire for test 616.

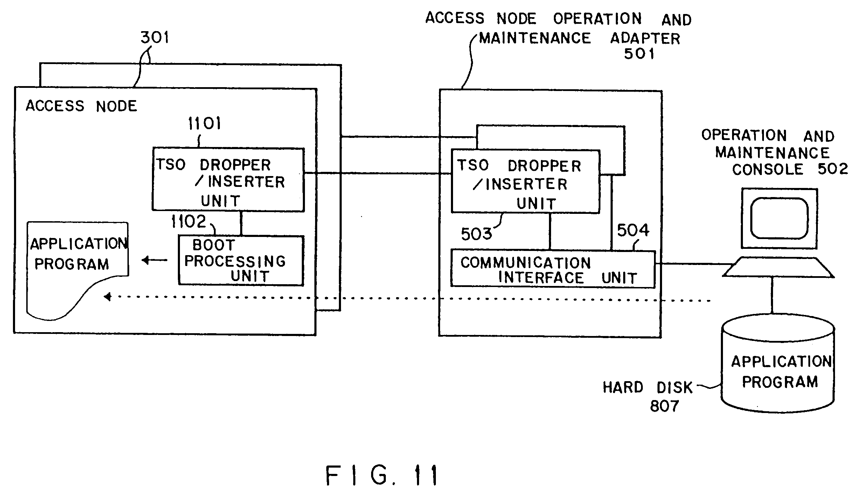

Furthermore, a specific V5 link interface unit 601 operates as a TS0 dropper/inserter unit 1101 shown in Fig.11 described later, and terminates the operation and maintenance link composed using the fourth, the fifth and the sixth bits of a time slot TS0 in the V5 link connected to the access node operation and maintenance adapter 501.

More specifically, in the above-mentioned specific V5 interface unit, bit data in the operation and maintenance link transferred from the access node operation and maintenance adapter 501 shown in Fig.5 is extracted in a bit dropper 608 while the frame synchronization and multi-frame synchronization of the bit data are established, and is transferred to an operation and maintenance adapter interface unit 603. On the contrary, the bit data transferred from the operation and maintenance adapter interface unit 603 is inserted in the operation and maintenance link by a bit inserter 609.

In the operation and maintenance adapter interface unit 603 a LAPB interface circuit 610, a microprocessor 611, a memory 612, a control bus interface circuit 613 and a failure receiving unit 614 are connected with each other by a bus 615.

The LAPB interface circuit 610 is connected with a bit dropper 608 and a bit inserter 609 in the V5 link interface unit 601 (TS0 dropper/inserter 1101).

The failure receiving unit 614 receives failure information (alarm) detected by hardware, not shown in the drawing, in the access node 301.

The control bus interface circuit 613 is connected with each V5 link interface unit 601, each subscriber circuit 602, a V5 protocol interface unit 617 and a test unit 606 via a control bus 605.

The microprocessor 611 and memory 612 communicate operation and maintenance-related information with the access node operation and maintenance adapter 501 shown in Fig.5 via the V5 link interface unit 601 (TS0 dropper/inserter unit 1101).
This information includes failure information received by the failure receiving unit 614 and various kinds of control information which the control bus interface circuit 613 communicates with each V5 link interface unit 601, each subscriber circuit 602, the V5 protocol interface unit 617 and the test unit 606.

### 〈Detailed configuration of the access node operation and maintenance adapter unit 501〉

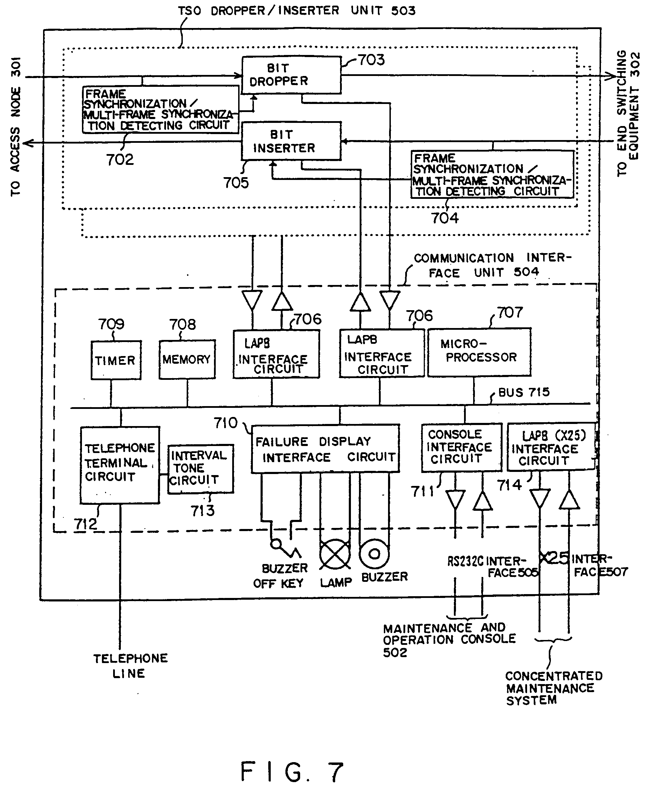

Fig.7 is a block diagram of an access node operation and maintenance adapter unit.

As shown in Fig.5, each of a plurality of TS0 dropper/inserter units 503 terminates all the operation and maintenance links in each V5 link corresponding to each of the access nodes 301 (#1 to #N) accommodated in the end switching equipment 302. The operation and maintenance link in each V5 link is composed using the fourth, the fifth and the sixth bits of each time slot TS0.

More specifically, in the above-mentioned TS0 dropper/inserter unit 503, bit data in the operation and maintenance link transferred from the access node 301 shown in Fig.5 is extracted by a bit dropper 703 while the frame synchronization and multi-frame synchronization of the bit data are established in a frame synchronization/multi-frame synchronization detecting circuit 702, and is transferred to a communication interface unit 504. On the contrary, bit data transferred from the communication interface unit 504 is inserted in the operation and maintenance link by a bit inserter 705 while the frame synchronization and multi-frame synchronization of the bit data are established in a frame synchronization/multi-frame synchronization detecting circuit 704.

In the communication interface unit 504 a plurality of LAPB interface circuits 706, a microprocessor 707, a memory 708, a timer circuit 709, a failure display interface circuit 710, a console interface circuit 711, a LAPB (X25) interface circuit 714 and a telephone terminal circuit 712 are connected with each other by a bus 715.

Each LAPB interface circuit 706 is connected with the bit dropper 703 and the bit inserter 705 in each TS0 dropper/inserter unit 503.

When failure information is received from any of the access nodes 301 via the TS0 dropper/inserter unit 503 and a LAPB interface circuit 706, a failure is reported to the maintenance personnel by means of a lamp, buzzer or buzzer-off key.

At the same time the above-mentioned failure is reported from the telephone terminal circuit 712 to a telephone set in a remote maintenance room or a portable telephone set of the maintenance personnel by means of a message, via a telephone line for maintenance according to a predetermined setting. In this case, after the maintenance personnel answers it, the degree of emergency is reported by sending a continuous tone from an interval tone circuit 713 to the maintenance personnel via the telephone terminal circuit 712. When the maintenance personnel hangs up a telephone handset, the state is detected via the telephone terminal circuit 712, and the sounding of a buzzer is stopped via the failure indication interface circuit 710.

Furthermore, simultaneously, the above-mentioned failure is reported from the LAPB (X25) interface circuit 714 to the centralized maintenance center, not shown in the drawing, using an X25 interface 507 shown in Fig.5 according to a predetermined setting.

On the other hand, various kinds of commands designated in the operation and maintenance console 502 shown in Fig.5 are relayed from an RS232C interface 505 (see Fig.5) and a console interface circuit 711 to a target access node 301 via the TS0 dropper/inserter unit 503. On the contrary, a response from the access node is relayed from the TS0 dropper/inserter unit 503 to the operation and maintenance console 502 via the console interface circuit 711 and the RS232C interface 505.

The microprocessor 707 and the memory 708 control all the operations described above.

### 〈Detailed configuration of the operation and maintenance console 502〉

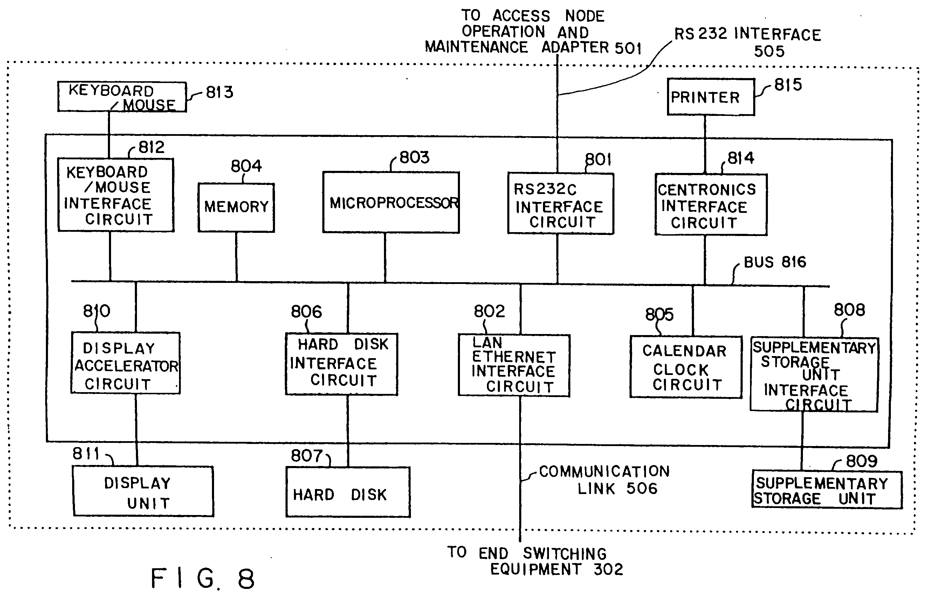

Fig.8 is a block diagram of an operation and maintenance console 502.

The operation and maintenance console 502 can be implemented with the same configuration as a normal personal computer and workstation, it is so configured that a normal RS232C interface circuit 801, a LAN (Ethernet) interface circuit 802, a microprocessor 803, a memory 804, a calendar clock circuit 805, a hard disk interface circuit 806 for controlling a hard disk 807, a supplementary storage unit interface circuit 808 for controlling a supplementary storage unit 809, a display accelerator circuit 810 for controlling a display unit 811, a keyboard/mouse interface circuit 812 for controlling a keyboard/mouse 813 and a Centronics interface circuit 814 controlling a printer 815 may be connected with each other by a bus 816.

The RS232C interface circuit 801 is connected with a console interface circuit 711 in the communication interface unit 504 shown in Fig.7 by the RS232C interface 505 shown in Fig.5.

The LAPB interface circuit 802 is connected with the end switching equipment 302 shown in Fig.5 by the communication link 506 shown in Fig.5.

In the hard disk 807 are stored the latest application programs for each access node 301 for a software down-loading process, described later (see Fig.11, etc.), and an initializing information database for an access node V5 system initializing process described later.

Since the operation and maintenance console 502 has to execute a relaying process, etc. for a test request from the end switching equipment, etc. in parallel with various kinds of man-machine interface functions, the console 502 operates under the control of an operating system in which a multi-task process is available.

### Initializing setting process of the access node operation and maintenance adapter unit 501

When operation of the access node operation and maintenance adapter unit 501 is started, it is necessary to report in advance relationships between an access node ID, which is led in the access node operation and maintenance adapter unit 501 from the operation and maintenance console 502, and a lead-in position (location) by a manual operation. In order to report an alarm to both regional intra-office maintenance personnel and a centralized maintenance office, it is also necessary to report in advance both telephone numbers and packet numbers. Furthermore, it is necessary to report an alarm report masking level for suppressing alarm reports with lower priority.

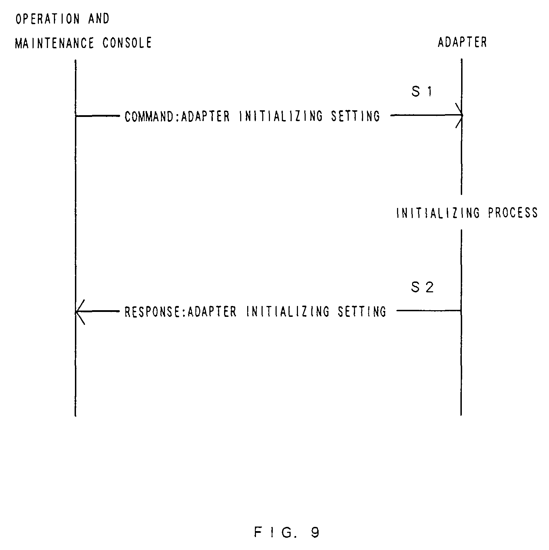

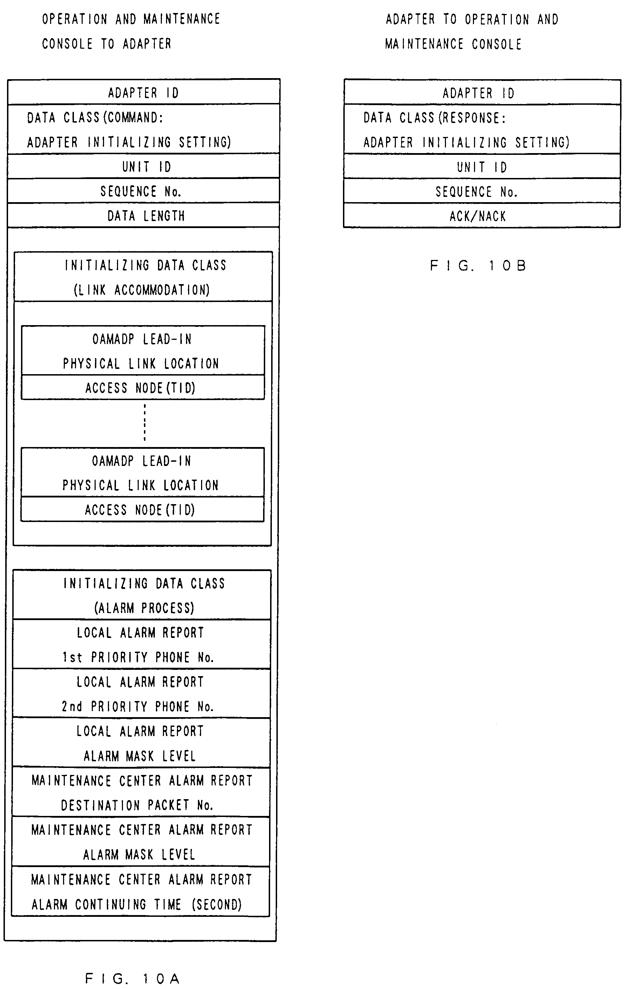

To implement these operations, first, when operation of the access node operation and maintenance adapter unit 501 is started, as shown as a communication sequence S1 in Fig.9, the operation and maintenance console 502 reports initializing setting command data having a structure shown in Fig.10A, to the access node operation and maintenance adapter unit 501.

The access node operation and maintenance adapter unit 501 executes an initializing process according to the contents of this command data, and when this is terminated, as shown as a communication sequence S2 in Fig.9, the access node operation and maintenance adapter unit 501 returns initializing setting response data having a structure shown in Fig.10B, to the operation and maintenance console 502.

In the description in and after Fig.9 an "adapter" means an access node operation and maintenance adapter unit 501.

### Software down-loading process

This preferred embodiment is characterized in that the latest application program can be always down-loaded from both the access node operation and maintenance adapter unit 501 having a high degree of freedom in installation, and the operation and maintenance console 502 connected to the adapter unit 501, to the access node 301 controlled by both the maintenance console 502 and adapter unit 501. Thus, there is no need to access the access node 301, there is no need to control the access node 301 from the end switching equipment, and the access node 301 can be provided with the latest functions.

More specifically, when operation of the access node 301 is started for the first time, the access node 301 is operated after an application program to be run is loaded from the operation and maintenance console 502. When the application program is updated, operation of the access node 301 is re-started after the latest application program is loaded from the operation and maintenance console 502.

Fig.11 explains the functions of a software down-loading process.

In the hard disk 807 (see Fig.8) in the operation and maintenance console 502, is stored in advance the latest application program for each access node 301 shown in Fig.5. For this reason, when the maintenance personnel wants to down-load a software to a specific access node 301, he or she designates the access node in the operation and maintenance console 502 and instructs down-loading of the software.

As a result, an application program to be down-loaded is transferred from the hard disk 807 in the operation and maintenance console 502 to a target access node 301 via the access node operation and maintenance adapter unit 501, and is stored in the access node 301.

In the access node 301 the transferred application program is taken out of an operation and maintenance link in a time slot TS0 by a TS0 dropper/inserter unit 1101 shown in Figs.11 and 6, is data-checked by a boot processing unit 1102, and if the result of the check is acceptable, the operation of application program is started by the boot processing unit 1102. The program to implement this boot processing unit is stored in a read only memory (ROM), not shown in the drawing, in the operation and maintenance adapter interface unit 603 shown in Fig.6, and when operation of the access node 301 is started, the operation of program is automatically started by the microprocessor 611 shown in Fig.6.

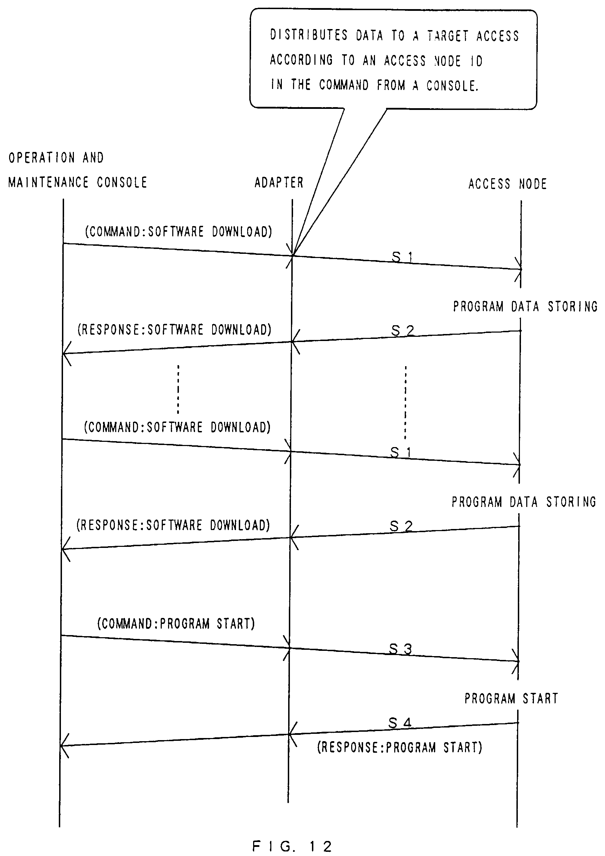

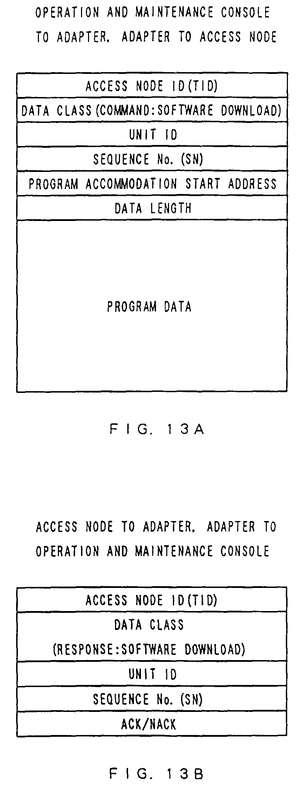

To implement these operations, as shown as a communication sequence S1 in Fig.12, first, the operation and maintenance console 502 transmits software down-load command data having a structure shown in Fig.13A, to a target access node 301 via the access node operation and maintenance adapter unit 501. This command data includes application data and a unit ID for specifying where the data should be down-loaded to. In this case, the access node operation and maintenance adapter unit 501 distributes the above-mentioned command data to the target access node 301 according to an access node ID (see Fig.13A) in the command data reported from the operation and maintenance console 502.

When the boot processing unit 1102 (Fig.11) implemented by the operation and maintenance adapter interface unit 603 (Fig.6) in the target access node 301 receives the above-mentioned software down-load command data, the interface unit 603 stores the data in a target unit indicated by the unit ID in the above-mentioned command data, and then, as shown as a communication sequence S2 in Fig.12, returns software down-load response data having a structure shown in Fig.13B, to the operation and maintenance console 502 via the access node operation and maintenance adapter unit 501.

The communication sequences S1 and S2 described above are repeatedly carried out for each unit in the access node 301 requiring software down-loading.

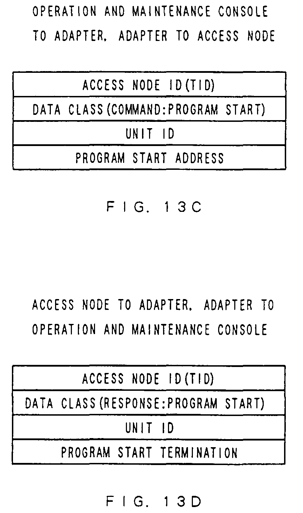

When a required application program is completely transferred, as shown as a communication sequence S3 in Fig.12, the operation and maintenance console 502 transmits program start command data having a structure shown in Fig.13C, to a target access node 301 via the access node operation and maintenance adapter unit 501. This command data includes a unit ID for specifying a target unit and a start address (program start address) of the access node 301 of a down-loaded application program. In this case, the access node operation and maintenance adapter unit 501 distributes the above-mentioned command data to the target access node 301 according to an access node ID (see Fig.13C) in the above-mentioned command data reported from the operation and maintenance console 502.

When the boot processing unit 1102 in the target access node 301 receives the above-mentioned program start command data, the processing unit 1102 makes a target program start, and then, as shown as a communication sequence S4 in Fig.12, returns a program start response data having a structure shown in Fig.13D, to the operation and maintenance console 502 via the access node operation and maintenance adapter unit 501.

### Access node V5 system initializing process

In order to start the operation of the access node 301 it is necessary to initialize the access node 301. In this preferred embodiment the initializing process can be executed on the operation and maintenance console 502.

That is, in this preferred embodiment, when operation of the access node 301 is started, a specific initializing information relating to the V5 system of the access node 301 can be designated from the operation and maintenance console 502.

The initializing information includes ID information of the access node 301 (TID), V5-related interface unit accommodation information (including port information), subscriber accommodation information (including a correspondence table between logical IDs and a physical ports), V5 link accommodation information, V5 control channel accommodation information, fixed dedicated line channel connection information, etc.

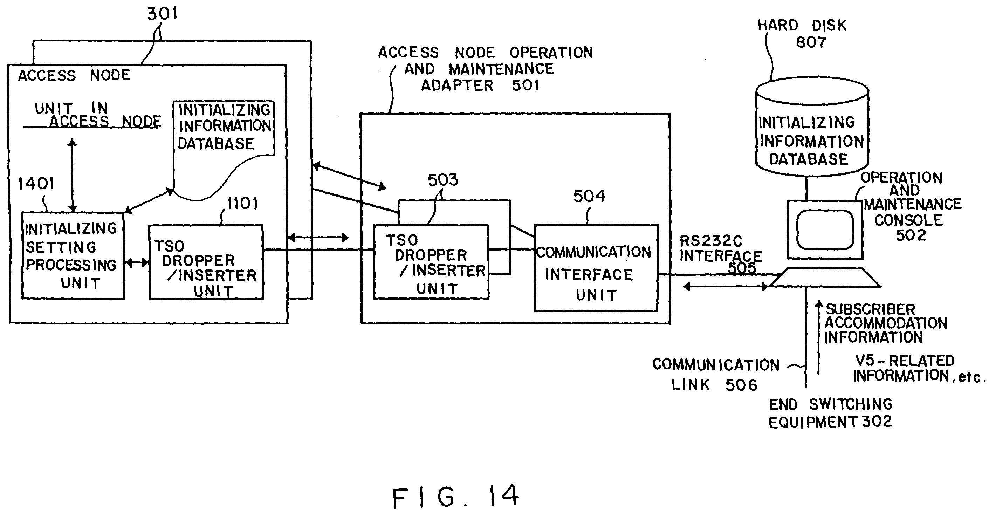

This information is basically input from the operation and maintenance console 502, and after data-checking, as shown in Fig.14, the information are stored in the hard disk 807 (see Fig.8) in the operation and maintenance console 502 as an initializing information database.

The maintenance personnel can report initializing information on a target access node from the initializing information database in the operation and maintenance console 502 to the access node 301 via the access node operation and maintenance adapter unit 501, if necessary.

Reporting time includes the start time of the access node 301, a time for recovery from a specific failure of the access node 301, a time for addition/deletion/modification of telephone subscribers, subscriber ports or V5 links, etc.

The key point of the access node V5 system initializing process is that it is necessary to synchronize the setting of subscriber accommodation information for the access node 301 and various kinds of V5-related information with the end switching equipment 302, and that the matching between the contents of these information can be maintained.

In the access node V5 system initializing process the subscriber accommodation information, the V5 link accommodating information and the V5 control channel information include information requiring such procedures in which a part of the information is designated by the end switching equipment 302, and further some information on the access node 301 side is added to the designation. In such a case, as shown in Fig.14, the related database set by the end switching equipment 302 is transmitted to the operation and maintenance console 502 using a communication link 506. After the maintenance personnel adds, edits and processes data as required for the contents of the related database on the operation and maintenance console 502, he or she reports resultant data to a target access node 301, and stores the data in the hard disk 807 as an initializing information database.

As shown in Fig.14, after the above-mentioned initializing information is read from the initializing information database in the hard disk 807 of the operation and maintenance console 502, the information is transmitted to a target access node 301 via a communication interface unit 504 and a TS0 dropper/inserter unit 503 in the access node operation and maintenance adapter unit 501. As shown in Fig.14, the above-mentioned initializing information is received by an initializing setting processing unit 1401 implemented by an operation and maintenance adapter interface unit 603 via the TS0 dropper/inserter unit 1101 (see Fig.6), is set to a target unit in the access node 301, and is stored inside in the target access node 301 as an initializing information database.

Then, the operation of V5 system is started according to an instruction from the end switching equipment 302 or the operation and maintenance console 502. The synchronizing procedure between the access node 301 and the end switching equipment 302 at this time of starting is specified in a publicly known V5 control protocol.

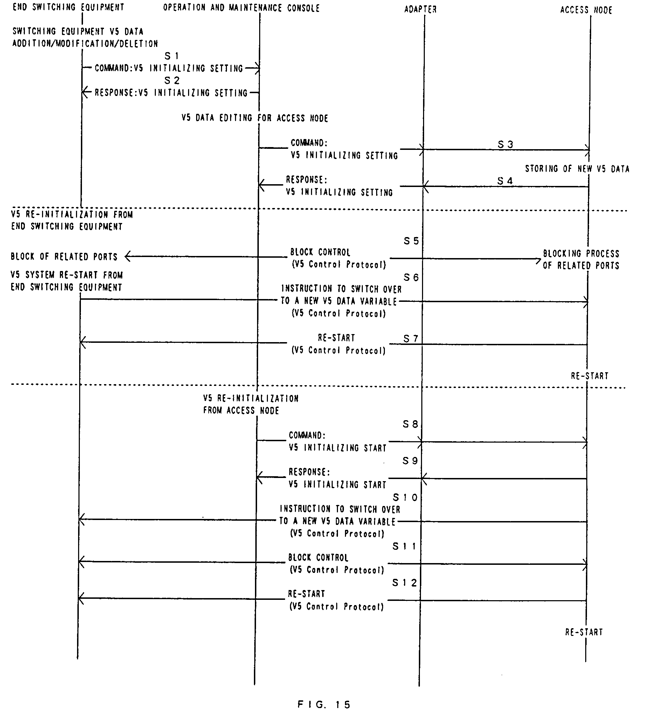

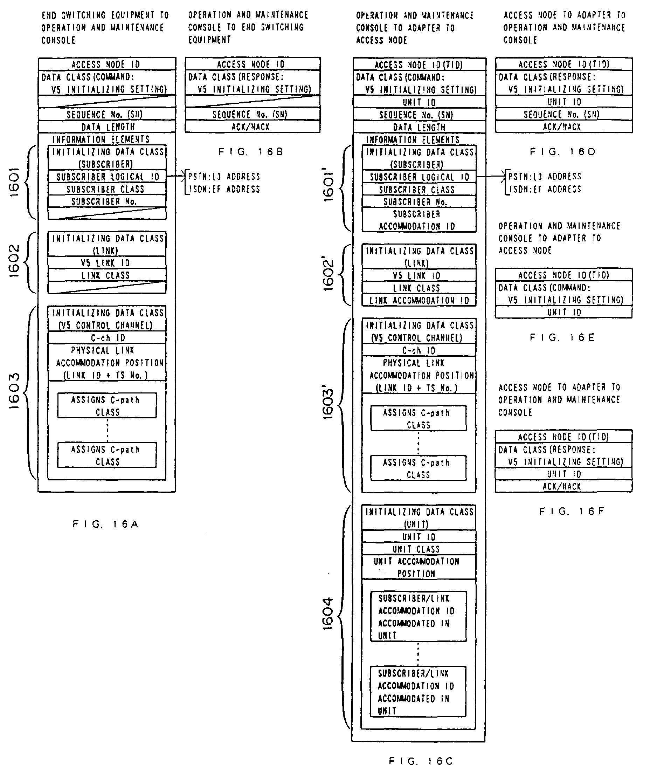

Fig.15 is a chart showing a communication sequence between the end switching equipment 302, the operation and maintenance console 502, the access node operation and maintenance adapter unit 501 and the access node 301 for implementing the above-mentioned access node V5 system initializing process. Figs.16A to 16F show the structure of control data used in the communication sequence.

When subscriber accommodation information, V5 link accommodation information or V5 control channel information is added, modified or deleted in the end switching equipment 302, as shown in the communication sequence of Fig.15, a V5 initializing set command having the data structure shown in Fig.16A is transmitted from the end switching equipment 302 to the operation and maintenance console 502 via the communication link 506 (Fig.5). This command includes subscriber accommodation information 1601, V5 link accommodation information 1602, V5 control channel information 1603, etc. The subscriber accommodation information 1601 from the end switching equipment 302 includes a subscriber logical ID, a subscriber class, a subscriber number, etc. The V5 link accommodation information 1602 from the end switching equipment 302 includes a V5 link ID, a link class, etc. The V5 control channel information 1603 from the end switching equipment 302 includes a C channel ID, a physical link accommodation position (link ID + time slot number), an allotted C channel path class, etc.

When the operation and maintenance console 502 receives the above-mentioned command, the console 502 returns a V5 initializing set response having the data structure shown in Fig.16B, to the end switching equipment 302 after storing the subscriber accommodation information 1601, the V5 link accommodation information 1602, the V5 control channel information 1603, etc. contained in the command in the initializing information database in the hard disk 807.

The maintenance personnel adds, edits or processes necessary data for the contents of the above-mentioned new initializing information database on the operation and maintenance console 502. More specifically, the maintenance personnel generates new subscriber accommodation information 1601' by adding a subscriber accommodation ID for specifying the subscriber in the target access node 301, to the subscriber accommodation information 1601 reported from the end switching equipment 302. The maintenance personnel also generates new V5 link accommodation information 1602' by adding a link accommodation ID for specifying a V5 link in the target access node 301, to the V5 link accommodation information 1602 reported from the end switching equipment 302. Furthermore, the maintenance personnel adds unit information 1604 (Fig.16B) being information on an initializing target unit in the target access node 301. This unit information 1604 includes a unit ID, a unit class, a unit accommodation position in the target access node 301, a subscriber accommodation ID for specifying a subscriber to be accommodated in the unit, a link accommodation ID for specifying a link to be accommodated in the unit, etc.

Then, as shown as a communication sequence S3 in Fig.15, an initializing set command containing initializing information the editing of which is completed, and having the data structure shown in Fig.16C is transmitted from the operation and maintenance console 502 to the target access node 301 via the access node operation and maintenance adapter unit 501. This command includes a subscriber accommodation information 1601' the editing of which is completed, V5 link accommodation information 1602', V5 control channel information 1603' (=1603), unit information 1604, etc.

After the operation and maintenance adapter interface unit 603 (see Fig.6) in the target access node 301 stores initializing information contained in the above-mentioned command, as shown as a communication sequence S4 in Fig.15, the interface unit 603 returns a V5 initializing set response having the data structure shown in Fig.16D, to the operation and maintenance console 502 via the access node operation and maintenance adapter unit 501.

At this time, both end switching equipment 302 and access node 301 are operated in a conventional environment, and are in a state where the preparation for V5 initializing data is completed.

The communication sequences S5 to S7 shown in Fig.15 show a synchronizing sequence between a target access node 301 and the end switching equipment 302 in the case where the operation of V5 system is started according to an instruction from the end switching equipment 302.

First, as shown as a communication sequence S5 in Fig.15, after related ports are blocked in the end switching equipment 302, the ports are instructed to block from the end switching equipment 302 to the target access node 301 using a publicly known V5 control protocol. As a result, the target access node 301 blocks the related ports.

Then, the end switching equipment 302 re-starts the V5 system, and as shown as a communication sequence S6 in Fig.15, instructs the target access node 301 to switch over to new initializing information using a publicly known V5 control protocol.

When the target access node 301 receives this instruction, as shown as a communication sequence S7 in Fig.15, it re-starts the V5 system according to the new initializing information, and reports the re-start to the end switching equipment 302 using a publicly known V5 control protocol.

The communication sequences S8 to S12 shown in Fig.15 show the synchronizing sequences between the operation and maintenance console 502, the target access node 301 and the end switching equipment 302 in the case where the operation of V5 system is started according to an instruction from the operation and maintenance console 502.

First, as shown as a communication sequence S8 in Fig.15, a V5 initializing start command having the data structure shown in Fig.16E is transmitted from the operation and maintenance console 502 to a target access node 301 via the access node operation and maintenance adapter unit 501.

When the target access node 301 receives the above-mentioned command, as shown as a communication sequence S9 in Fig.15, a V5 initializing start response having the data structure shown in Fig.16F is transmitted to the operation and maintenance console 502 via the access node operation and maintenance adapter unit 501.

At the same time, as shown as communication sequences S10 and S11 in Fig.15, the target access node 301 instructs the end switching equipment 302 to switch over to new initializing information using a publicly known V5 control protocol, and further instructs the related ports to block. As a result, the new initializing information is switched over to, and the related ports are blocked in both target access node 301 and end switching equipment 302.

Furthermore, as shown as a communication sequence S12 in Fig.15, the target access node 301 reports the re-start to the end switching equipment 302. As a result, the operation of V5 system is re-started according to the new initializing information in both target access node 301 and end switching equipment 302.

The subscriber information between the access node 301 and the end switching equipment 302 is exchanged by designating a subscriber logical ID (see Figs.16A and 16C).

### Alarm-related process

Alarms (failure information) occurring in each access node are detected in a failure receiving unit 614 (Fig.6) in the operation and maintenance adapter interface unit 603 of each access node 301, and are written in an alarm bit map table stored in a memory 612 (see Fig.6) by a microprocessor 611 (Fig.6).

In this alarm bit map table an alarm in units of access node 301, an alarm in units of physical links and other alarms are corresponded to bit locations on the bit map, and the existence/non-existence of alarms is displayed using "1" or "0" values set for each bit on the bit map.

The alarms are classified into categories of a critical alarm, a major alarm, a minor alarm, a warning alarm, etc. according to the degree of emergency, and the above-mentioned alarm bit map tables are also classified into a plurality of tables of a critical alarm map table, a major map table, a minor alarm table, a warning alarm map table, etc.

Then, an alarm detected in the access node 301 updates the bit information on a bit location corresponding to the alarm in the alarm bit map table corresponding to a category of the alarm.

If a new alarm occurs or an existing alarm vanishes, an alarm report processing unit 1701 implemented by the operation and maintenance adapter interface unit 603 (see Fig.6) in the access node 301 transmits a report message to the access node operation and maintenance adapter unit 501 which entered the latest data of the alarm bit map table. When a plurality of alarms occur simultaneously, the alarms are reflected on the alarm bit map table, and the alarm bit map table is stored in a report message and transmitted.

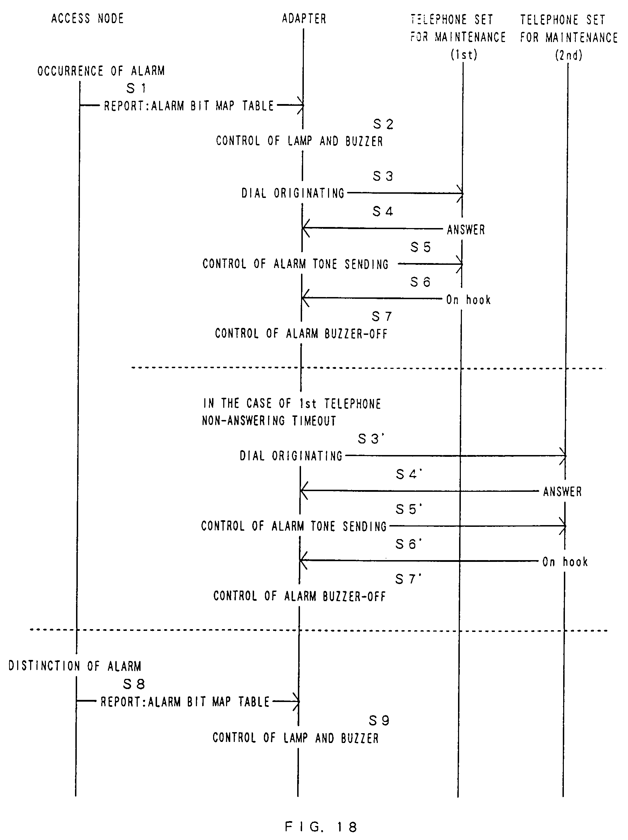

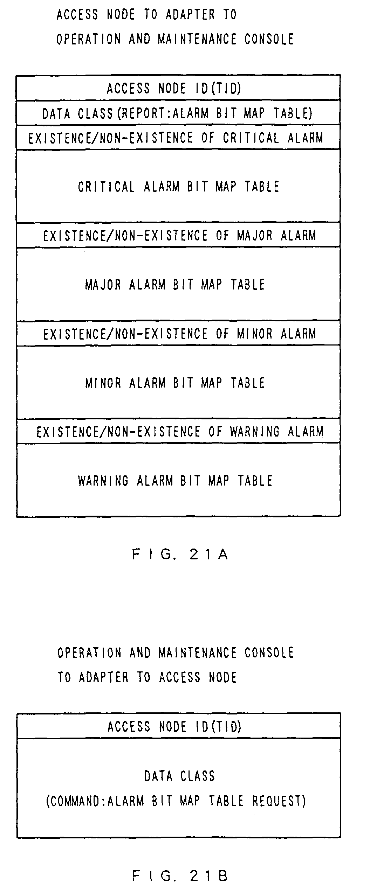

Fig.18 is the communication sequence chart, and Figs.21A and 21B show the data structure of the above-mentioned alarm bit map table report memory. The above-mentioned transmitting operation corresponds to the communication sequence S1 shown in Fig.18. A data field indicating the existence/non-existence of alarms in each alarm bit map table is provided in the data structure shown in Fig.21A, which enables the access node operation and maintenance adapter unit 501 to easily judge on the existence/non-existence of alarms in each alarm bit map table. Thus, the process load of the access node operation and maintenance adapter unit 501 can be reduced.

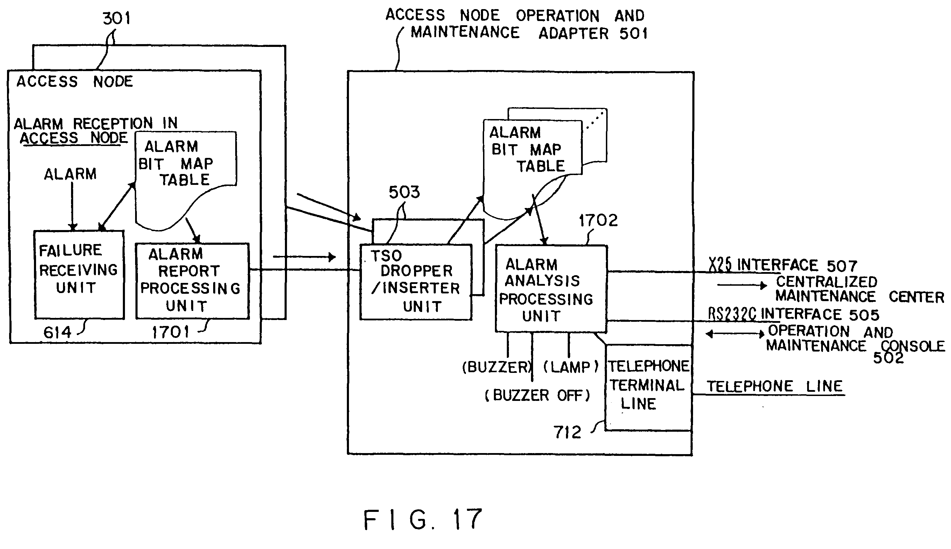

When an alarm analysis processing unit 1702 (Fig.17) implemented by a communication interface unit 504 (see Fig.7) in the access node operation and maintenance adapter unit 501 receives a report message with an alarm bit map table from any of a plurality of access nodes 301 accommodated by the adapter unit 501, the processing unit 1702 analyzes the alarms according to the alarm bit map table.

In this case, the latest alarm bit map tables from all the access nodes 301 are stored in a memory 804 or a hard disk 807 (for both, see Fig.8) in the alarm analysis processing unit 1702 (communication interface unit 504) of the access node operation and maintenance adapter unit 501. Every time the alarm analysis processing unit 1702 receives an alarm bit map table, the processing unit 1702 recognizes the occurrence, continuation and cancellation of alarms by comparing the alarm bit map table with the contents of the stored alarm bit map table.

If as the result of the above-mentioned alarm analysis an alarm is found continuing, the alarm analysis processing unit 1702 lights a lamp connected to a failure display interface circuit 710 (see Fig.7) (communication sequence S2 in Fig.18).

The alarm analysis processing unit 1702 also has counters not shown in the drawing for each category for the degree of emergency of alarms. If an alarm corresponding to a category occurs, the number of a counter corresponding to the category of the alarm is increased by one. If an alarm corresponding to a category vanishes, the number of a counter corresponding to the category of the alarm is reduced by one. Thus, lamp indication is controlled by the value of this counter.

If as the result of the above-mentioned alarm analysis a new alarm is detected, the alarm analysis processing unit 1702 reports the occurrence of an alarm to the maintenance personnel by sounding a buzzer connected to a failure display interface circuit 710 (communication sequence S2 in Fig.18).

At this time of buzzer control, the alarm analysis processing unit 1702 stores the category for the degree of alarms currently making the buzzer sound, and if an alarm belonging to a category of a higher degree of emergency occurs, the alarm analysis processing unit 1702 sound a buzzer for an alarm belonging to a category for the new degree of emergency.

Intervals of lamp light flashing and buzzer sound interval vary depending on the category of the degree of emergency (critical/major/minor/warning).

If a plurality of alarms with different degrees of emergency are detected, an alarm belonging to a category for a higher degree of emergency is reported with priority.

When all alarms corresponding to currently reported degrees of emergency vanish, if there is an alarm belonging to a category for a second higher degree of emergency, a lamp for the alarm belonging to this category is controlled. If all alarms belonging to all categories with a degree of emergency are cancelled, all reports by means of lamps and buzzers are stopped (communication sequences S8 and S9 in Fig.18).

The buzzer sounding for currently existing alarms can also be stopped by the operation of a buzzer-off key in the access node operation and maintenance adapter unit 501 or a buzzer-off request from the operation and maintenance console 502.

The maintenance personnel are not always near by the access node operation and maintenance adapter unit 501. In such a case, in order to report an alarm to the destination of movement of the maintenance personnel, a dial origination to the telephone set of the maintenance personnel is carried out via a telephone terminal circuit 712. In this case, in order to check the answer from the maintenance personnel available, the telephone set of the maintenance personnel is accommodated in a telephone line having a function of reversing the polarity of the talking power supply when answering (public telephone lines, etc.).

When the maintenance personnel answers the above-mentioned dial origination, a sound having a tone class and a sounding interval corresponding to the degree of emergency of an alarm is reported from a telephone terminal circuit 712 to the telephone set of the maintenance personnel. When the maintenance personnel hangs up the receiver, a buzzer-off function automatically works, and a buzzer sounding from the access node operation and maintenance adapter unit 501 is stopped (communication sequences S3 to S7 in Fig.18).

When a first telephone set of the maintenance personnel is not answered within a certain time after dial origination, the same report is made to a predetermined second telephone set of the maintenance personnel (communication sequences S3' to S7' in Fig.18). Thus, connection failure in the telephone sets of the maintenance personnel can be avoided.

The system can also be so configured that the origination is re-tried at intervals of a certain time until the maintenance personnel of the first telephone answers.

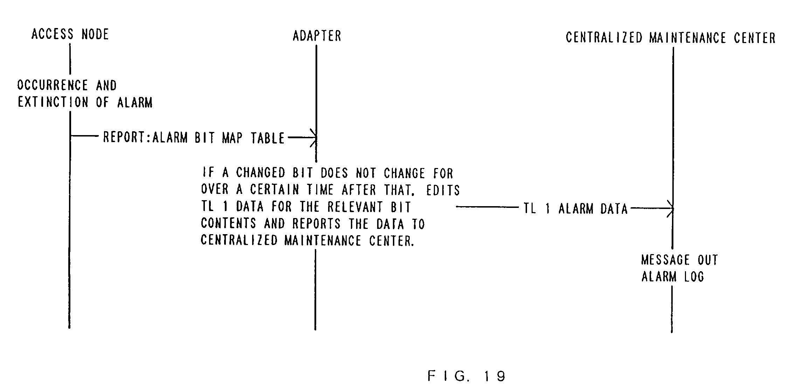

There is a case where the maintenance at night of the access node is monitored at a centralized maintenance center. For this purpose, as shown as a communication sequence in Fig.19, the alarm analysis processing unit 1702 (communication interface unit 504) in the access node operation and maintenance adapter unit 501 is connected to the centralized maintenance center, not shown in the drawing, via a X25 interface 507 by a LAPB interface circuit 714 (see Fig.7), and transmits alarm event information from the access node 301, for example, using a TL1 language. In the centralized maintenance center a proper output processing of an alarm message is executed according to this TL1 information, and dialog information on the alarm is recorded.

The continuation of an alarm state for a certain time period is monitored so that a large volume of event information will not be generated for the occurrence of failures in a short period of time.

Alarms belonging to a category of a lower degree of emergency such as a minor/warning class, etc. can also be prevented from being transmitted according to settings made by the maintenance personnel. As a result, only alarms belonging to categories of higher degree of emergency will be reported to the centralized maintenance center or the telephone set of the maintenance personnel.

All controls described above are carried out by a microprocessor 707 (see Fig.7) in a communication interface unit 504 implementing the alarm analysis processing unit 1702 shown in Fig.17.

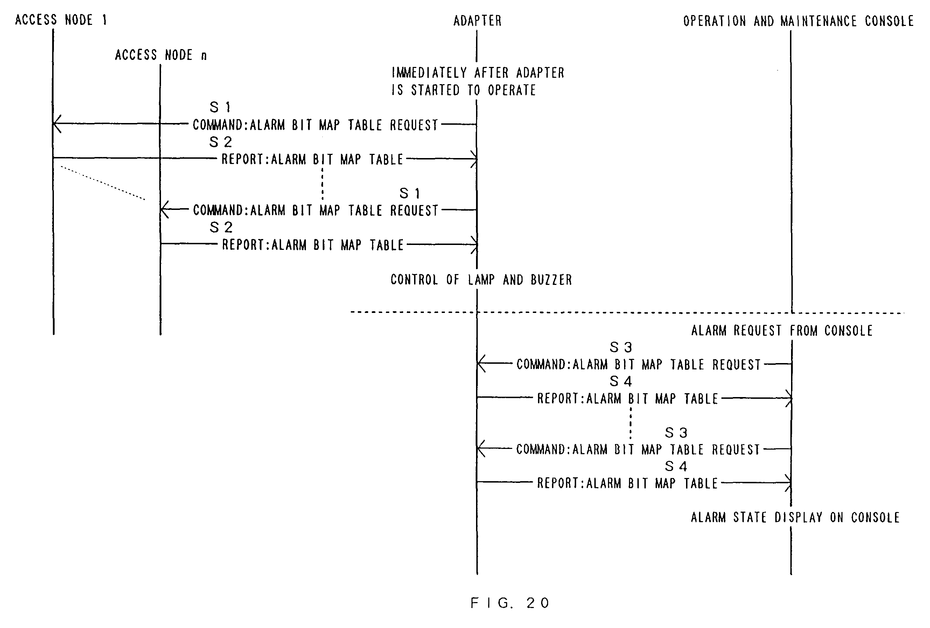

When operation of the access node operation and maintenance adapter unit 501 is re-started after the adapter unit 501 fails due to some cause, as shown as a communication sequence S1 in Fig.20, an alarm bit map table request command having the data structure shown in Fig.21B is transmitted from the access node operation and maintenance adapter unit 501 to each access node 301 after the initializing setting process of the access node operation and maintenance adapter unit 501 described before. As a result, as shown as a communication sequence S2 in Fig.20, the access node operation and maintenance adapter unit 501 can acquire each alarm bit map table from each access node 301 accommodated by the access node operation and maintenance adapter unit 501, and can control lamps or buzzers according to the alarm bit map table.

However, in this case, alarms are not reported to the telephone set of the maintenance personnel or the centralized maintenance center. The fact that the access node operation and maintenance adapter unit 501 has re-started operation is reported to the telephone set of the maintenance personnel or the centralized maintenance center.

If the maintenance personnel want to display an alarm state, the alarm bit map tables of all access nodes 301 are transmitted from the access node operation and maintenance adapter unit 501 to the operation and maintenance console 502 according to a request from the operation and maintenance console 502, and are displayed according to an instruction by the operator (communication sequences S3 and S4 in Fig.20).

### Status-related process

Since the status management of the access node 301 is related to the hardware configuration of the access node 301, the status management of the access node 301 cannot be carried out in the end switching equipment 302. In this preferred embodiment the status-related process can be executed on the operation and maintenance console 502.

The status-related process includes a status monitor request for the component units in each access node 301 and an interface line part, and a status modify request.

When the maintenance personnel want the status information of a specific access node 301, the maintenance personnel issue a command on the operation and maintenance console 502.

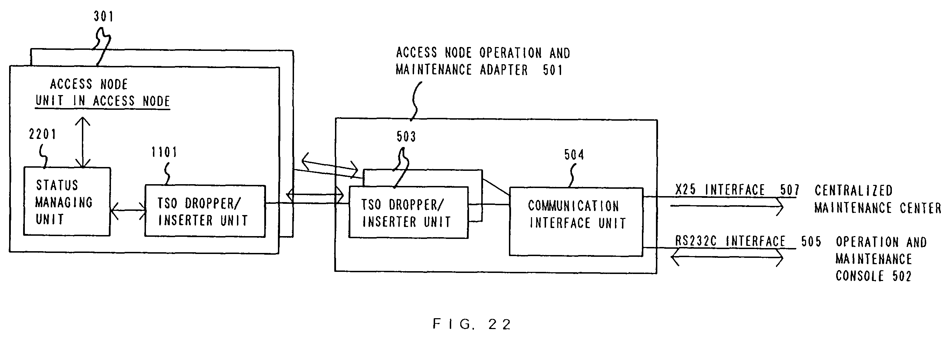

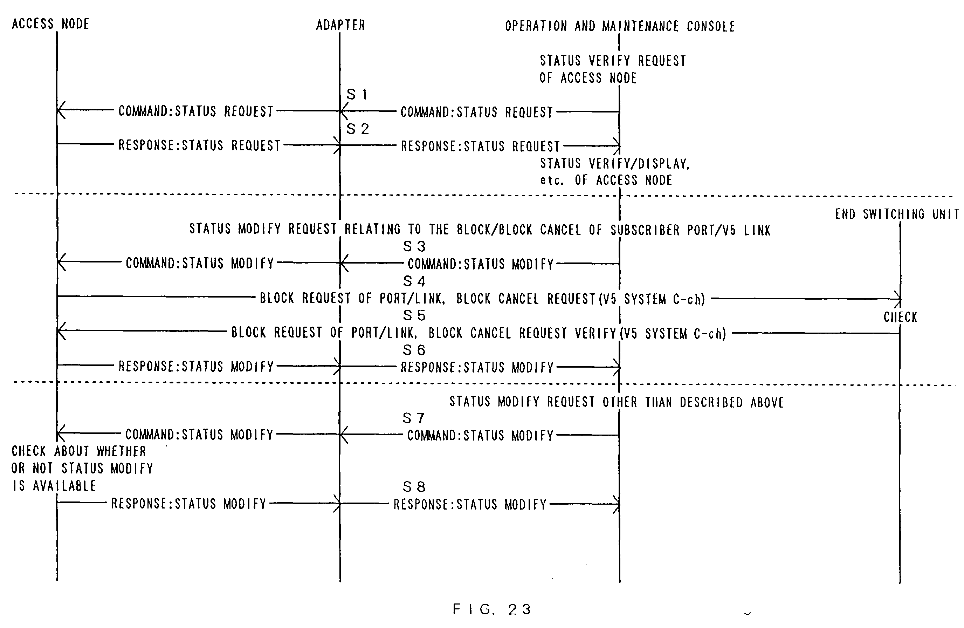

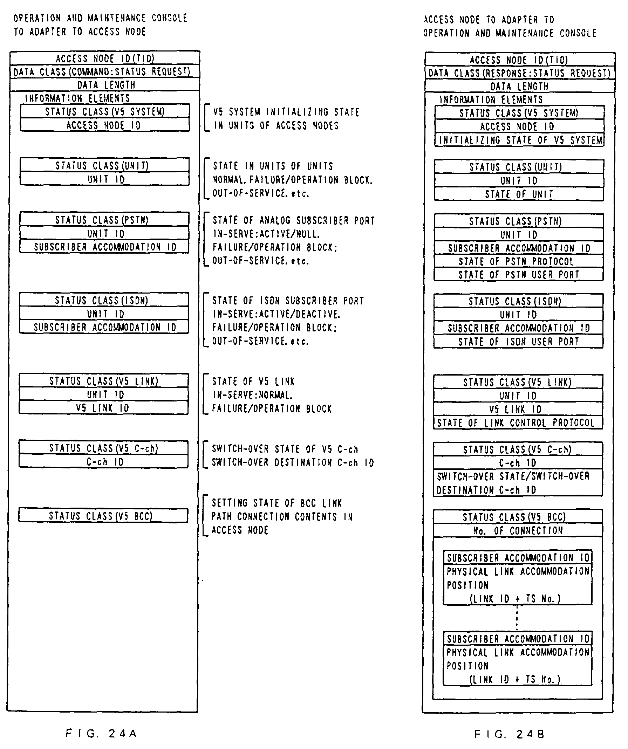

Fig.22 explains the function of a status-related process, Fig.23 is the communication sequence of the status-related process, and Figs.24A and 24B show the structure of the control data of a status request.

As shown as a communication sequence S1 in Fig.23, the operation and maintenance console 502 transmits a status request command having the data structure shown in Fig.24A, to a target access node 301 via the access node operation and maintenance adapter unit 501 (communication interface unit 504, TS0 dropper/inserter unit 503).

When a status managing unit 2201 (Fig.22) implemented by an operation and maintenance adapter interface unit 603 (see Fig.6) in the target access node 301 receives the above-mentioned command via a TS0 dropper/inserter unit 1101 (see Fig.6), as shown as a communication sequence S2 in Fig.23, the managing unit 2201 returns a status request response in which the status (state) information of each component unit in the target access node 301, is stored, and having the data structure shown in Fig.24B.

As a result, the operation and maintenance console 502 can verify and display the status of each component unit in the target access node 301.

The status monitors implemented by the above-mentioned control process are as follows.
- The verification of the starting state of the access node 301 by the access node V5 system initializing process
- The verification of the service state (in service, out of service, in a maintenance block or in a failure block) of the component units in the access node 301
- The verification of the service state (in service, out of service, in a maintenance block or in a failure block) of analog subscribers, and the distinction of an idle/originating or receiving/busy state in service
- The verification of the service state (in service, out of service, in a maintenance block or in a failure block) of ISDN subscribers, and the distinction of active/null state in service
- The distinction of the service state (normal, in a maintenance block, in a failure block) of the V5 link
- The verification of the switching-over state of the V5 control channel, and the verification of the switched-over control channel in the case where it is switched over
- The verification of the path connecting state (contents connected by a V5 bearer channel connection (BCC) protocol) in the access node 301

Next, when a status modification of a specific access node 301 is needed, the maintenance personnel issue a command to designate a target access node 301, a target unit, and the contents of a state to be modified from the operation and maintenance console 502.

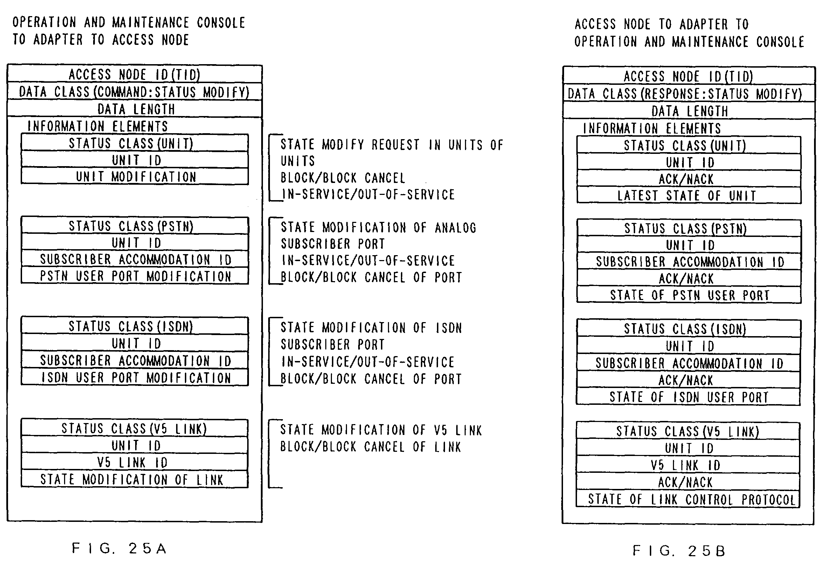

Figs.25A and 25B show the structure of control data relating to status modification.

As shown as communication sequences S3 and S7 in Fig.23, the operation and maintenance console 502 transmits a status modify command having the data structure shown in Fig.25A, to a target access node 301 via an access node operation and maintenance adapter unit 501 (communication interface unit 504, TS0 dropper/inserter unit 503).

When a status managing unit 2201 (Fig.22) implemented by the operation and maintenance adapter interface unit 603 (see Fig.6) in the target access node 301 receives the above-mentioned command via the TS0 dropper/inserter unit 1101 (see Fig.6), in cases other than a case relating to the block/block cancel of a subscriber port/V5 link, the status managing unit 2201 checks whether or not the status can be modified, and then, as shown as a communication sequence S8 in Fig.23, returns a status modify response in which the result of the status modification is stored, and having the data structure shown in Fig.25B, to the operation and maintenance console 502 via the access node operation and maintenance adapter unit 501.

In the case of the status modification relating to the block/block cancel of the subscriber port/V5 link, as shown as a communication sequence S4 and S5 in Fig.23, the status managing unit 2201 carries out synchronization with the end switching equipment 302 using a V5 control channel in the V5 link, and then, as shown as a communication sequence S6 in Fig.23, returns a status modify response in which the result of the status modification is stored, and having the data structure shown in Fig.25B, to the operation and maintenance console 502 via the access node operation and maintenance adapter unit 501.

In this case, any unreasonable status modification is checked by both the access node 301 and end switching equipment 302, and a status modify response for indicating an unavailable status modification is returned to the operation and maintenance console 502.

The same status monitoring/status modifying process as described above is also available at the centralized maintenance center, not shown in the drawing.

The status modifications implemented by the controlling process described above are as follows.
- State modification of analog/ISDN subscribers: The block/block cancel of ports (for this control a verifying procedure using a V5 control channel is needed). The switch-over between the out-of-service and in-service states of blocked subscribers.
- The block/block cancel of the V5 link (for this control a verifying procedure using a V5 control channel is also needed).
- The block/block cancel of the component units of the access node 301 (for this control a procedure for verifying that all subscribers/links accommodated in the unit are blocked, is also needed). The switch-over between the out-of-service and in-service states of blocked units.

### Subscriber line/subscriber circuit test (analog-related test)

Basically a subscriber line/subscriber circuit test is instructed from a line test terminal, not shown in the drawing, in the end switching equipment 302. This test is also available on an operation and maintenance console 502.

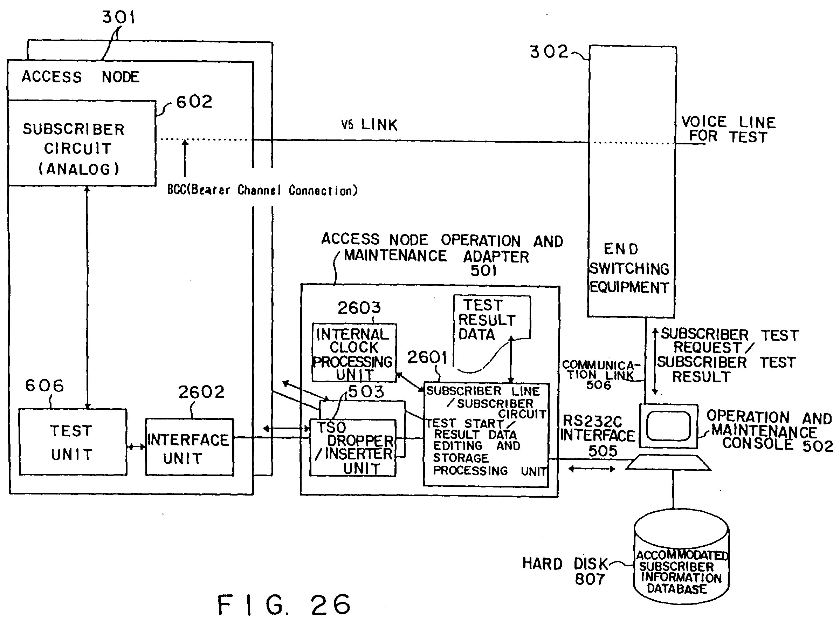

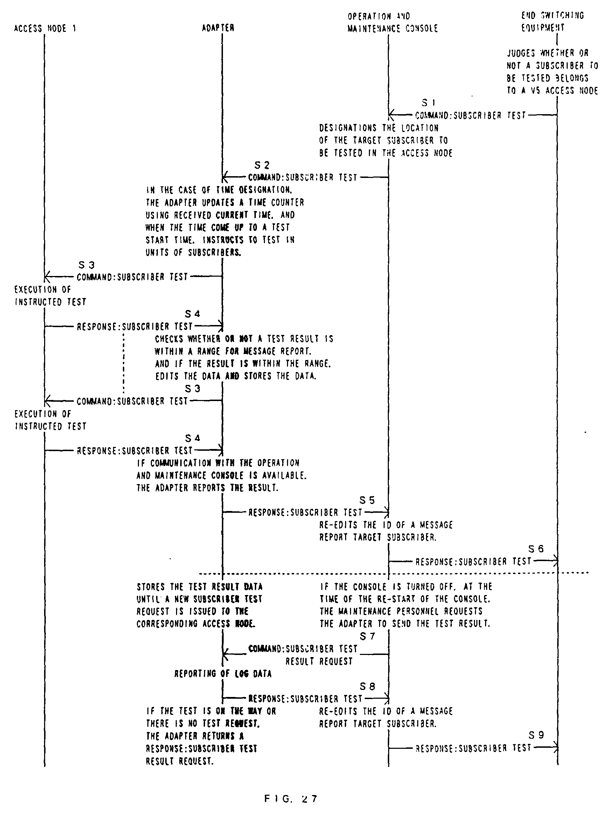

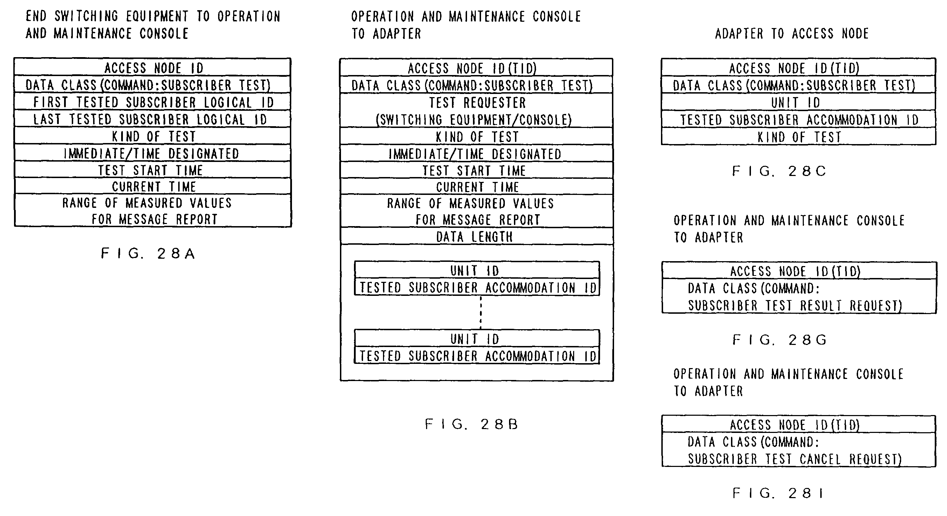

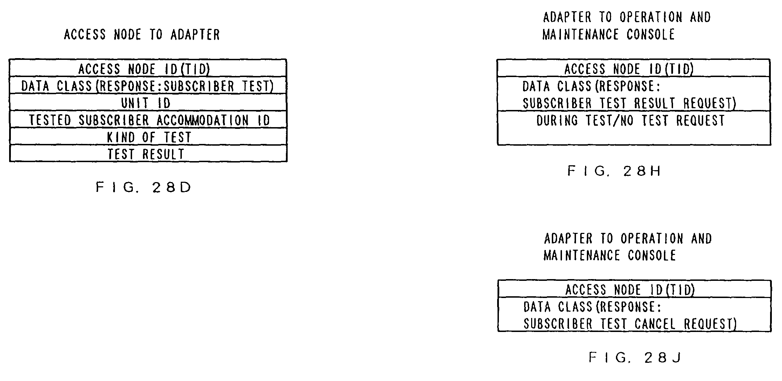

Fig.26 explains the functions of a subscriber line/subscriber circuit test (analog-related test), Fig.27 is a communication sequence chart for the subscriber line/subscriber circuit test (analog-related test), and Figs.28A to 28J show the structure of control data for the subscriber line/subscriber circuit test (analog-related test).

When the subscriber line/subscriber circuit test is instructed from a line test terminal, not shown in the drawing, in the end switching equipment 302, as shown as a communication sequence S1 in Fig.27, a subscriber test command having the data structure shown in Fig.28A for requesting a test, is transmitted from the above-mentioned line test terminal in the end switching equipment 302 to the operation and maintenance console 502 via the communication link 506 (Fig.5), if it is recognized that a subscriber to be tested belongs to the access node 301 of the V5 system.

As shown in Fig.28A, besides an access node ID and a command class, this subscriber test command includes the range of subscribers to be tested, the kind of tests, immediate/time designation, a test start time in the case of time designation, the current time recognized by the end switching equipment 302, the range of each measured value (limit) for reporting a message for each test item, etc. The range of subscribers to be tested is designated using a subscriber logical ID (see Figs.16A and 16C) designated in the above-mentioned access node V5 system initializing process, and since a test request for a plurality of subscribers is anticipated, both first tested subscriber logical ID and last tested subscriber logical ID are also designated.

When the operation and maintenance console 502 receives a subscriber test command from the end switching equipment 302, a tested subscriber accommodation ID (corresponding to the subscriber accommodation ID of 1601' in Fig.16C) for specifying subscribers to be tested in a target access node 301, and a unit ID (corresponding to the unit ID in Fig.16C) for specifying units in the target access node 301 in which the subscribers to be tested are accommodated, are extracted and edited by referring to the accommodated subscriber information database stored in the hard disk 807 (see Fig.8) in the operation and maintenance console 502 according to the access node ID, first tested subscriber logical ID and last tested subscriber logical ID contained in the above-mentioned subscriber test command.

The accommodated subscriber information database stored in the hard disk 807 is the same as the initialing information database (see Fig.14) stored in the hard disk 807 in the above-mentioned access node V5 system initializing process.

Next, as shown as a communication sequence S2 in Fig.27, the operation and maintenance console 502 transmits a subscriber test command including the contents received from the end switching equipment 302, data for specifying whether a test requester is the end switching equipment 302 or the operation and maintenance console 502, and the set data of the above-mentioned tested subscriber accommodation ID and a unit ID, and having the data structure shown in Fig.28B, to an access node operation and maintenance adapter unit 501 via a RS232C interface 505 (see Fig.5).

A subscriber line/subscriber circuit test start/result data editing and storage processing unit 2601 (Fig.26) implemented by a communication interface unit 504 (see Figs.5 and 7) in the access node operation and maintenance adapter unit 501, temporarily stores the contents of the received subscriber command, and as shown as a communication sequence S3 in Fig.27 transmits the subscriber test command having the data structure shown in Fig.28C, to a target access node 301 via a TS0 dropper/inserter unit 503 (see Fig.5) immediately or at a designated time, if an immediate test or a time designated test, respectively are designated. This command is transmitted for each test item/to each subscriber, and includes a unit ID corresponding to the test item, a tested subscriber accommodation ID and the kind of a test.

When a time designated test is designated, an internal clock processing unit 2603 (Fig.26) counts elapsed time starting from the current time contained in the subscriber test command received from the operation and maintenance console 502, and judges the above-mentioned designated time by comparing the test start time contained in the subscriber test command received from the operation and maintenance console 502 with the above-mentioned elapsed time. The internal clock processing unit 2603 (Fig.26) is implemented by a timer circuit 709 (see Fig.7).

When a test unit 606 (see Fig.6) in the target access node 301 receives the above-mentioned subscriber test command via an interface unit 2602 (Fig.26) implemented by a TS0 dropper/inserter unit 1101 and an operation and maintenance adapter interface unit 603 (for both, see Fig.6), the test unit 606 judges whether or not a subscriber to be tested specified by the tested subscriber accommodation ID contained in the command is busy in a subscriber circuit 602 (see Fig.6) specified by the unit ID contained in the command.

When the test unit 606 judges that the above-mentioned subscriber to be tested is not busy, the test unit 606 carries out a subscriber test designated as the kind of test contained in the above-mentioned command.

If in this subscriber test, communication is needed between the end switching equipment 302 and the subscriber to be tested, a voice line for test of the end switching equipment 302 to which test equipment is connected, and a tested subscriber line are connected using a BCC protocol (see Fig.26) of the V5 system.

When a dial pulse of a telephone set is tested, dial pulses are detected in the access node 301 using a PSTN signaling protocol of the V5 system, the dial pulses are reported to the end switching equipment 302, the number of the dial pulses is counted in the end switching equipment 302, and the counted number is reported to the test equipment in the end switching equipment 302.

When a DTMF is tested, a receiving test is carried out by a DTMF receiver prepared in the end switching equipment 302, and the result of the test is reported to the test equipment in the end switching equipment 302.

When the subscriber test is completed, as shown as a communication sequence S4 in Fig.27, the test unit 606 returns the test result to the access node operation and maintenance adapter unit 501 via the interface unit 2602 as a subscriber test response having the data structure shown in Fig.28D.

If the test unit 606 judges that the above-mentioned subscriber to be tested is busy, the test unit 606 returns a busy state as a subscriber test response.

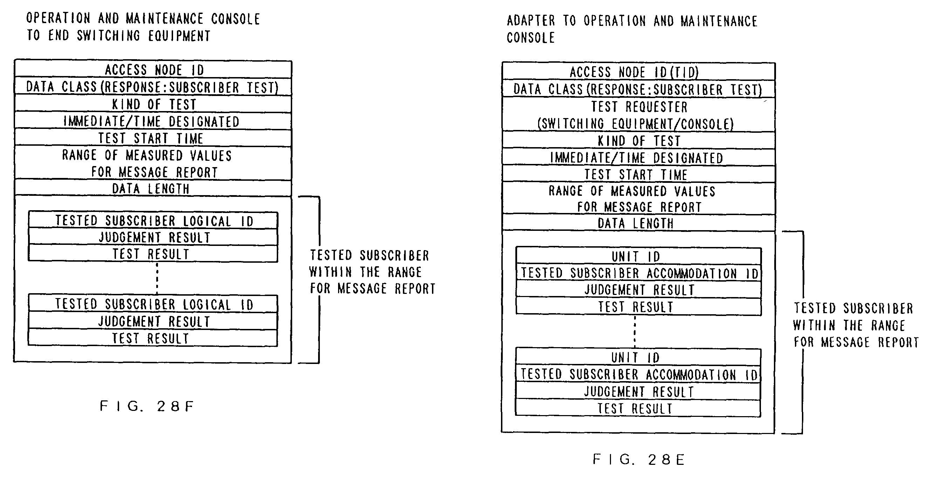

When the subscriber line/subscriber circuit test start/ result data editing and storage processing unit 2601 in the access node operation and maintenance adapter unit 501 receives the above-mentioned subscriber test response via the TS0 dropper/inserter unit 503, the processing unit 2601 judges whether or not the test result contained in the subscriber test response is within the measurement range of the test (limit) designated in advance by the subscriber test command (Fig.28A) from the end switching equipment 302. If the test result is within the measurement range of the test, as shown as a communication sequence S5 in Fig.27, the processing unit 2601 reports both the result of the judgement and the test result, to the operation and maintenance console 502 as a subscriber test response having the data structure shown in Fig.28E. Then, the processing unit 2601 clears the stored data relating to a subscriber test corresponding to the reported test result.

When all test results are needed, it is acceptable if the measuring range of the test is made to be from -∞ to +∞.

If the above-mentioned test result is not within the measurement range of the test, the processing unit 2601 controls the subscriber test of the next subscriber to be tested after clearing the stored data relating to the subscriber test corresponding to the test result.

The processing unit 2601 repeatedly executes the transmitting process of a subscriber test command to a target access node 301 (communication sequence S3 in Fig.27) and the receiving process of a subscriber test response from the access node 301 (communication sequence S4 in Fig.27) described above for all subscribers to be tested designated by the end switching equipment 302, and the test unit 606 in the target access node 301 carries out a subscriber test corresponding to each subscriber test command. The test period of the entire V5 system can be reduced by carrying out the above-mentioned control operation between a plurality of access nodes in parallel.

When at the time of reporting each test result, etc. from the access node operation and maintenance adapter unit 501 to the operation and maintenance console 502, communication with the operation and maintenance console 502 is not available for a reason such that the operation and maintenance console 502 is turned off, etc., the subscriber line/subscriber circuit test start/result data editing and storage processing unit 2601 temporarily stores an unreported test result, etc. until a request is issued from the operation and maintenance console 502.

When at the time of the next re-start of the operation and maintenance console 502, the maintenance personnel input a subscriber test result request command, as shown as a communication sequence S7 in Fig.27, a subscriber test result command having the data structure shown in Fig.28G is transmitted from the operation and maintenance console 502 to the access node operation and maintenance adapter unit 501 in units of access nodes.

When the subscriber line/subscriber circuit test start/result data editing and storage processing unit 2601 receives the above-mentioned subscriber test result request command from the operation and maintenance console 502, as shown as a communication sequence S8 in Fig.27, the processing unit 2601 reports all temporarily stored test results of the target access node 301, to the operation and maintenance console 502 as a subscriber test response shown in Fig.28E. Then, the processing unit 2601 clears the stored data relating to a subscriber test corresponding to the reported test result.

When the processing unit 2601 receives the above-mentioned test result request command from the operation and maintenance console 502, if the subscriber test is not completed yet or there is no relevant subscriber test request, the processing unit 2601 also reports to the operation and maintenance console 502 as a subscriber test result request response as shown in Fig.28H.

If the test is not started, a subscriber test cancel request command having the data structure shown in Fig.28I can be transmitted from the operation and maintenance console 502 to the access node operation and maintenance adapter unit 501. In this case, the subscriber line/subscriber circuit test start/ result data editing and storage processing unit 2601 in the access node operation and maintenance adapter unit 501 cancels a subscriber test of a target access node 301, and returns a subscriber test cancel request response having the data structure shown in Fig.28J to the operation and maintenance console 502 after clearing the stored data for a subscriber test.

If the requester of the subscriber test is the end switching equipment 302, as shown as a communication sequence S9 in Fig.27, the operation and maintenance console 502 which has received both the judgement result and test result from the access node operation and maintenance adapter unit 501 returns both the judgement result and test result to the maintenance personnel in the end switching equipment 302 as a subscriber test response having the data structure shown in Fig.28F.

Instead of the set of a unit ID and a tested subscriber accommodation ID which are to be attached by the subscriber test response (Fig.28E) reported from the access node operation and maintenance adapter unit 501, a subscriber logical ID is attached to each set of a judgement result and a test result to be stored in this subscriber test response.

If the requester of the subscriber test is the operation and maintenance console 502, the operation and maintenance console 502 which has received both the judgement result and test result from the access node operation and maintenance adapter unit 501 displays the test result on a display unit 811 (Fig.8) or outputs the test result to a printer 815 (Fig.8).

### ISDN subscriber-related test (digital)

The test relating to N-ISDN (narrow band width integrated services digital network) line includes a start test of a physical layer and a bit error rate test.

The start test of a physical layer is carried out according to the same communication sequence as in the case of the above-mentioned analog-related test.

In the bit error rate test, the bit error rate including both access node 301 and V5 link is measured using a bit error rate measuring instrument mounted in the end switching equipment 302.

In this case, a data channel for verifying a test bit transmission/loop test is established between a subscriber to be tested and the bit error rate measuring instrument by the end switching equipment 302 using a BCC protocol of the V5 system.

On the other hand, since the manufacturers of the access node 301 and the end switching equipment 302 are not always the same, an instruction to set up a loop for a digital subscriber circuit 602 or a terminating circuit NT1 (for both, see Fig.6) which is needed in a bit error measurement, cannot be made via a V5 link. In this preferred embodiment this loop instruction can be made by a bit error rate test command of a N-ISDN from the end switching equipment 302 to the operation and maintenance console 502.

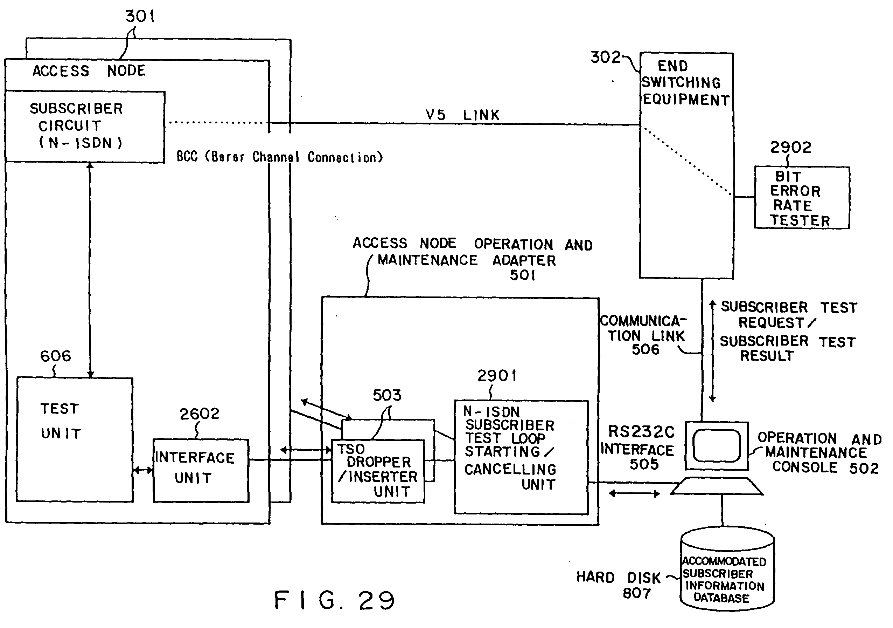

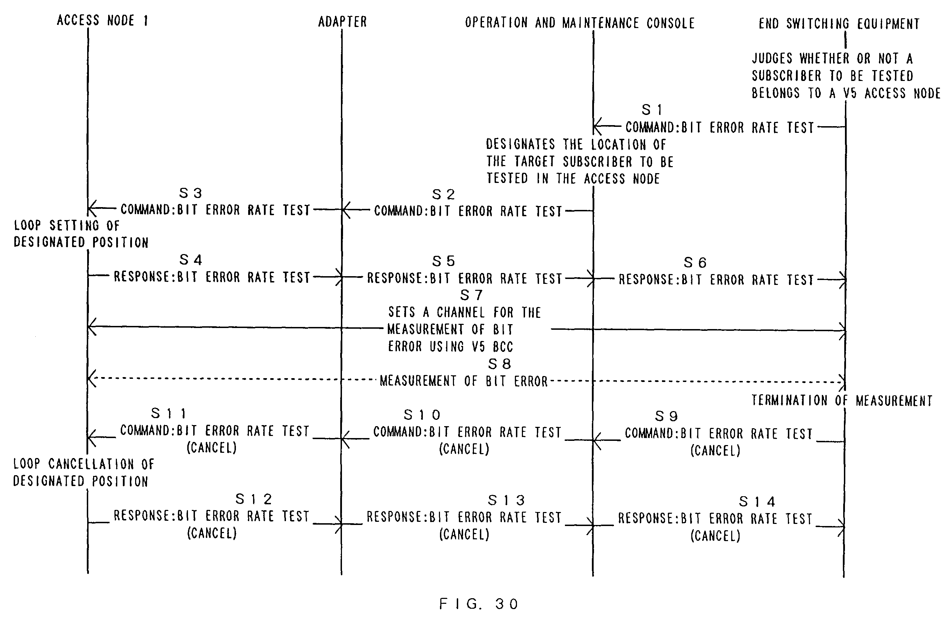

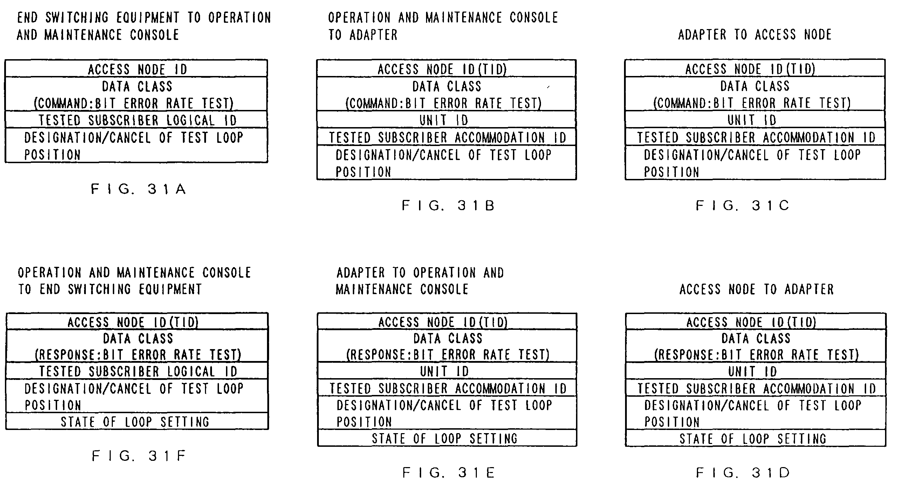

Fig.29 explains the functions of an ISDN subscriber-related test (digital), Fig.30 is a communication sequence chart for an ISDN subscriber-related test (digital), and Figs.31A to 31F show the structure of control data for an ISDN subscriber-related test (digital).

First, as shown as a communication sequence S1 in Fig.30, a bit error rate test command having the data structure shown in Fig.31A for requesting a bit error rate test is transmitted from the end switching equipment 302 to the operation and maintenance console 502 via a communication link 506 (Fig.5).

As shown in Fig.31A, this bit error rate test command includes a tested subscriber logical ID and a test loop position besides an access node ID and a data class.

When the operation and maintenance console 502 receives the above-mentioned bit error rate test command from the end switching equipment 302, as shown as a communication sequence S2 in Fig.30, the console 502 transmits a bit error rate test command having the data structure shown in Fig.31B, to the access node operation and maintenance adapter unit 501 after converting a tested subscriber logical ID contained in the command to a unit ID and a tested subscriber accommodation ID understandable to the access node 301.

When an N-ISDN subscriber test loop starting/cancelling unit 2901 (Fig.29) implemented by a communication interface unit 504 (see Fig.7) in the access node operation and maintenance adapter unit 501 receives the above-mentioned bit error rate test command, as shown as a communication sequence S3 in Fig.30, the starting/cancelling unit 2901 transmits a bit error rate test command having the data structure shown in Fig.31C, to a target access node 301. This data structure is the same as the data structure shown in Fig.31B.

When a test unit 606 (see Fig.6) of the target access node 301 receives the above-mentioned bit error rate test command via an interface unit 2602 (Fig.29) implemented by both TS0 dropper/inserter unit 1101 and operation and maintenance adapter interface unit 603 (for both, see Fig.6), the test unit 606 instructs a loop setting in the digital subscriber circuit 602 (see Fig.6) specified by the contents of the command to set up a loop.

When the loop setting is completed, as shown as a communication sequence S4 in Fig.30, the test unit 606 returns a bit error rate test response having the data structure in Fig.31D, to the access node operation and maintenance adapter unit 501 via the interface unit 2602. This response includes a loop setting state.

When the N-ISDN subscriber test loop starting/cancelling unit 2901 in the access node operation and maintenance adapter unit 501 receives the above-mentioned bit error rate test response from the target access node 301 via the TS0 dropper/inserter unit 503, as shown as a communication sequence S5 in Fig.30, the starting and cancelling unit 2901 returns a bit error rate test response having the data structure shown in Fig.31E, to the operation and maintenance console 502. This data structure is the same as the data structure shown in Fig.31D.

When the operation and maintenance console 502 receives the above-mentioned bit error rate test response from the access node operation and maintenance adapter unit 501, as shown as a communication sequence S6 in Fig.30, the console 502 returns a bit error rate test response having the data structure shown in Fig.31F, to the end switching equipment 302 after converting both unit ID and tested subscriber logical ID contained in the response to a tested subscriber logical ID understandable to the end switching equipment 302.

As a result, if the end switching equipment 302 receives the bit error rate test response, the preparation of the bit error rate test is completed.

As a result, as shown as a communication sequence S7 in Fig.30, a channel for the measurement of a bit error rate is set between the subscriber to be tested and a bit error rate tester 2902 using a BCC protocol (see Fig.29) of the V5 system, and then, as shown as a communication sequence S8 in Fig.30, the measurement of a bit error rate is started.

After the completion of the bit error rate test, a test path is released by the end switching equipment 302 via the V5 link, and the cancellation of the test loop is instructed from the end switching equipment 302 to the access node 301 via both operation and maintenance console 502 and access node operation and maintenance adapter unit 501.

A series of communication sequences concerning the cancellation of the test loop shown as S9 to S14 in Fig.30 is the same as a series of the above-mentioned communication sequences concerning the designation of the test loop position shown as S1 to S6 in Fig.30.

### Other test processes

The diagnosis of each component unit in the access node 301, the check of a link ID of the V5 link and the like, are carried out by an instruction from the operation and maintenance console 502.

That is, at the time of the diagnosis the operation and maintenance console 502 checks whether or not a target-tested unit is in a diagnosable state (out-of-service state/blocked state). If the unit is diagnosable, the console 502 instructs the access node 301 to diagnose via the access node operation and maintenance adapter unit 501.

The result of the diagnosis is reported from the access node 301 to the operation and maintenance console 502 via the access node operation and maintenance adapter unit 501.

## Claims

1. A system for operating and maintaining an access node (301) connected to a switching equipment (302) by a logical link in which a predetermined communication protocol is specified, and having a function of expanding a geographical accommodation area of subscribers managed by said switching equipment, comprising:
operation and maintenance terminal means, said operation and maintenance terminal means (502) comprising:
first communicating means (802) connected with said switching equipment (302) using a first interface (506), for communicating switching equipment dependent information being information dependent on the relevant switching equipment with said switching equipment;
information converting means (803) for converting the relevant switching equipment dependent information to access node dependent information being information dependent on said access node (301), and vice versa;
man-machine interfacing means (803, 811, 813, 815) for editing the relevant access node dependent information; and
second communicating means (801) connected to a second interface (505), and
access node operation and maintenance adapter means, said access node operation and maintenance adapter means (501) comprising:
operation and maintenance link terminating means (503) for accommodating a predetermined link connected to said access node (301), and terminating an operation and maintenance link set in the relevant logical link;
operation and maintenance terminal connecting means (711) for connecting said operation and maintenance terminal means using said second interface; and
access node dependent information relaying means (707) for relaying said access node dependent information between said operation and maintenance terminal means and said access node (301) via said second communicating means (801), said second interface (505), said operation and maintenance terminal connecting means (711), said operation and maintenance link terminating means (503) and said operation and maintenance link.

2. The system according to claim 1, wherein
first communicating means in the said operation and maintenance terminal means communicates with said switching equipment switching equipment dependent initializing information being initializing information for said access node, which depends on the relevant switching equipment,
information converting means in said operation and maintenance terminal means converts said switching equipment dependent initializing information to access node dependent initializing information being initializing information for the relevant access node, which depends on said access node, and vice versa,
man-machine interfacing means in said operation and maintenance terminal means edits said access node dependent initializing information,
access node dependent information relaying means in said access node operation and maintenance adapter means relays said access node dependent initializing information for initializing said access node between said operation and maintenance terminal means and said access node via said second communicating means, said second interface, said operation and maintenance terminal connecting means, said operation and maintenance link terminating means and said operation and maintenance link, and
said access node executes an initializing process of the relevant access node according to said access node dependent initializing information relayed by said access node operation and maintenance adapter means.

3. The system according to claim 2, wherein
said access node executes an initializing process according to said access node dependent initializing information while synchronizing with said switching equipment using a logical link in which said predetermined communication protocol is specified.

4. The system according to claim 1, wherein
said access node operation and maintenance adapter means further comprises:
alarm analyzing means for analyzing alarms relating to said access node being said access node dependent information received from said access node via said operation and maintenance link and said operation and maintenance link terminating means; and
alarm reporting means for reporting alarms according to the result of an alarm analysis by the relevant alarm analyzing means.

5. The system according to claim 4, wherein
said alarm reporting means further comprises a telephone terminal means for reporting said alarms by dialling to a predetermined telephone terminal means.

6. The system according to claim 4, wherein
said alarm reporting means comprises a centralized maintenance center connecting means for reporting said alarms by being connected a predetermined centralized maintenance center.

7. The system according to claim 1, wherein
first communicating means in said operation and maintenance terminal means communicates switching equipment dependent subscriber test information being information dependent on the relevant switching equipment with said switching equipment, and for controlling a subscriber test in said access node,
information converting means in the said operation and maintenance terminal means converts said switching equipment dependent subscriber information to access node dependent subscriber test information being information dependent on said access node, and for controlling a subscriber test in the relevant access node, and vice versa,
man-machine interfacing means in the said operation and maintenance terminal means edits said access node dependent subscriber test information,
access node dependent information relaying means in the said access node operation and maintenance adapter means relays said access node dependent subscriber test information for controlling a subscriber test in said access node between said operation and maintenance terminal means and said access node via said second communicating means, said second interface, said operation and maintenance terminal connecting means, said operation and maintenance link terminating means and said operation and maintenance link, and
said access node executes a subscriber test in the relevant access node according to said access node dependent subscriber test information relayed by said access node operation and maintenance adapter means.

8. The system according to claim 7, wherein
both said switching equipment dependent subscriber test information and said access node dependent subscriber test information include test designation information necessary for testing analog subscribers accommodated in said access node and test result information for indicating the result of the relevant test.

9. The system according to claim 7, wherein
both said switching equipment dependent subscriber test information and said access node dependent subscriber test information include test loop information necessary for carrying out a loop test for digital subscribers accommodated in said access node.

10. The system according to claim 1, wherein
said operation and maintenance terminal means further comprises application program storing means for storing an application program to operate said access node being said access node dependent information,
said access node dependent information relaying means in said access node operation and maintenance adapter means transmits said application program from the application program storing means in said operation and maintenance terminal means to said access node via said second communicating means, said second interface, said operation and maintenance terminal connecting means, said operation and maintenance link terminating means and said operation and maintenance link, and
said access node starts to operate according to said application program sent from said access node operation and maintenance adapter means.

11. The system according to claim 1, wherein
said access node dependent information includes status request information for requesting the status of said access node said access node, status modification information for modifying the status of said access node or status information for indicating the status of said access node.

12. An access node operation and maintenance adapter apparatus used in a system for operating and maintaining an access node connected to a switching equipment by a logical link in which a predetermined communication protocol is specified, and having a function of expanding a geographical accommodation area of subscribers managed by the end switching equipment, comprising:
operation and maintenance link terminating means for accommodating a predetermined logical link connected to said access node and terminating an operation and maintenance link set in the relevant logical link;
operation and maintenance terminal connecting means for connecting operation and maintenance terminal means using a second interface; and
access node dependent information relaying means for relaying said access node dependent information between said operation and maintenance terminal means and said access node via said second interface, said operation and maintenance terminal connecting means, said operation and maintenance link terminating means and said operation and maintenance link.

13. An operation and maintenance terminal apparatus used in a system for operating and maintaining an access node connected to a switching equipment by a logical link in which a predetermined communication protocol is specified, and having a function of expanding a geographical accommodation area of subscribers managed by the end switching equipment, comprising:
first communicating means connected with said switching equipment using a first interface, and for communicating switching equipment dependent information being information dependent on the relevant switching equipment, with said switching equipment;
information converting means for converting the switching equipment dependent information to said access node dependent information being information dependent on said access node, and vice versa;
man-machine interfacing means for editing the relevant access node dependent information; and
second communicating means connected to the second interface.

14. A computer readable recording medium storing a recorded program to be readable and executable by an operation and maintenance terminal computer used in a system for operating and maintaining an access node connected to a switching equipment by a logical link in which a predetermined communication protocol is specified, and with a function of expanding a geographical accommodation area of subscribers managed by the end switching equipment computer, comprising the functions of:
communicating switching equipment dependent information being information dependent the relevant switching equipment, with said switching equipment connected via the first interface;
converting the relevant switching equipment dependent information to access node dependent information being information dependent on said access node, and vice versa;
editing the relevant access node dependent information; and
communicating said access node dependent information with an access node operation and maintenance adapter apparatus connected via a second interface.

15. A method for operating and maintaining an access node connected to a switching equipment by a logical link in which a predetermined communication protocol is specified, and having a function of expanding a geographical accommodation area of subscribers managed by said switching equipment, comprising:
an operation and maintenance terminal step, said operation and maintenance terminal step comprising:
a first communicating step associated with said switching equipment using a first interface, for communicating switching equipment dependent information being information dependent on the relevant switching equipment with said switching equipment;
an information converting step for converting the relevant switching equipment dependent information to access node dependent information being information dependent on said access node, and vice versa;
a man-machine interfacing step for editing the relevant access node dependent information; and
a second communicating step associated with a second interface, and
an access node operation and maintenance adapter step, said access node operation and maintenance adapter step comprising:
an operation and maintenance link terminating step for accommodating a predetermined link connected to said access node, and terminating an operation and maintenance link set in the relevant logical link;
an operation and maintenance terminal connecting step for connecting said operation and maintenance terminal means using said second interface; and
an access node dependent information relaying step for relaying said access node dependent information between said operation and maintenance terminal step and said access node via said second communicating step, said second interface, said operation and maintenance terminal connecting step, said operation and maintenance link terminating step and said operation and maintenance link.

16. An access node operation and maintenance adapter method used in a system for operating and maintaining an access node connected to a switching equipment by a logical link in which a predetermined communication protocol is specified, and having a function of expanding a geographical accommodation area of subscribers managed by the end switching equipment, comprising:
an operation and maintenance link terminating step for accommodating a predetermined logical link connected to said access node and terminating an operation and maintenance link set in the relevant logical link;
an operation and maintenance terminal connecting step for associating said operation and maintenance terminal step using a second interface; and
an access node dependent information relaying step for relaying said access node dependent information between said operation and maintenance terminal step and said access node via said second interface, said operation and maintenance terminal connecting step, said operation and maintenance link terminating step and said operation and maintenance link.

17. An operation and maintenance terminal method used in a system for operating and maintaining an access node connected to a switching equipment by a logical link in which a predetermined communication protocol is specified, and having a function of expanding a geographical accommodation area of subscribers managed by the end switching equipment, comprising:
a first communicating step associated with said switching equipment using a first interface, and for communicating switching equipment dependent information being information dependent on the relevant switching equipment, with said switching equipment;
an information converting step for converting the switching equipment dependent information to said access node dependent information being information dependent on said access node, and vice versa;
a man-machine interfacing step for editing the relevant access node dependent information; and
a second communicating step associated with the second interface.
